# EUROPEAN PATENT SPECIFICATION

(11) **EP 3 965 472 B1**
(45) Date of publication and mention of the grant of the patent: **24.06.2026**
(21) Application number: 20813112.8
(22) Date of filing: 01.06.2020
(51) Int. Cl.: H04W 36/00, H04W 36/32, H04W 48/16, H04W 48/20, H04W 24/08

(54) **NETWORK ACCESS METHOD AND APPARATUS OF TERMINAL DEVICE**
NETZWERKZUGRIFFSVERFAHREN UND VORRICHTUNG VOM ENDGERÄT
PROCÉDÉ D'ACCÈS AU RÉSEAU ET APPAREIL DE DISPOSITIF TERMINAL

(30) Priority: 31.05.2019 CN 201910469908
(43) Date of publication of application: 09.03.2022
(73) Proprietor: Huawei Technologies Co., Ltd., Shenzhen, Guangdong 518129 (CN)
(72) Inventor: MA, Jingwang, Shenzhen, Guangdong 518129 (CN)
(74) Representative: Isarpatent
(86) International application number: PCT/CN2020/093763
(87) International publication number: WO 2020/239128

(56) References cited:
- EP-A1- 3 198 940
- WO-A1-2017/031384
- WO-A1-2019/074263
- CN-A- 103 781 136
- CN-A- 103 796 256
- CN-A- 104 853 386
- CN-A- 105 228 200
- CN-A- 109 640 250
- US-A1- 2014 295 842
- US-A1- 2015 195 757
- US-B2- 10 271 297
- HUAWEI ET AL: "Mobility enhancement for Drones", vol. RAN WG2, no. Hangzhou, CHINA; 20170515 - 20170519, 14 May 2017 (2017-05-14), XP051275500, Retrieved from the Internet <URL:http://www.3gpp.org/ftp/Meetings_3GPP_SYNC/RAN2/Docs/> [retrieved on 20170514]

## Description

### CROSS-REFERENCE TO RELATED APPLICATIONS

This disclosure generally relates to the field of mobile communication technologies.

### TECHNICAL FIELD

The invention in particular relates to a network access method of a terminal device and a communication apparatus as well as a computer-readable storage medium.

### BACKGROUND

In a current 5G (5th generation) mobile communication technology, a mobile communication network including an access network device may provide a highly reliable network access service for a terminal device (UE) based on information about a movement route of the terminal device, to satisfy a reliability requirement for a network service in a scenario such as a 5G vertical industry.

A current network access management method is as follows: When UE receives and measures a network signal, the UE selects and accesses a network. Specifically, when a terminal moves, the UE and an access network need to perform related operations such as signal measurement and parsing and network selection, and the UE performs access among a plurality of network cells in a competitive random access mode. This cannot ensure access reliability. In addition, a base station configures, for the UE, a relatively large quantity of cells that need to be measured during handover, or broadcasts a relatively large quantity of cells that are used for cell reselection. Consequently, the UE may additionally search for a plurality of cells or frequencies, resulting in a waste of power consumption. A ping-pong effect may further be caused when the UE is handed over to or camps on an inappropriate cell. This increases an additional signaling exchange between the terminal and a network, and increases network load.

US20150195757A1 (Robert Tietz [GB] ET AL) discloses a system in which a base station initiates a handover of a mobile relay node associated with the base station. The base station obtains information that identifies at least one further base station, and that indicates that the at least one further base station is capable of providing donor services to the mobile relay node. When the base station determines that the mobile relay node requires handover, it selects, from at least one cell of the at least one further base station identified by the obtained information, a target cell for handover of the mobile relay node, and performs handover of the mobile relay node to the selected target cell.

WO 2017/031384A1 (Parallel Wireless Inc) discloses systems and methods for cell ID disambiguation. One disclosed method is for constructing a neighbor table, comprising: receiving, at a mobile base station, a physical cell identifier (PCI) of a detected neighbor base station from a user equipment (UE); receiving a global positioning system (GPS) position of the mobile base station; and associating the GPS position of the mobile base station with the PCI of the detected neighbor base station in a neighbor table.

The standard change proposal by HUAWEI ET AL, "Mobility enhancement for Drones", vol. RAN WG2, no. Hangzhou, CHINA; 20170515 - 20170519, (20170514), 3GPP DRAFT; R2-1704997 MOBILITY ENHANCEMENT FOR DRONES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN2/Docs/, (20170514), XP051275500 discloses a proposal and discussion related to enhancing mobility for drones within the 3GPP (3rd Generation Partnership Project) telecommunications specifications, particularly focusing on handover processes. Frequent handover failures due to strong interference from neighboring cells or other user equipments (UEs) as the drone's flying altitude are a problem. It is described that handover failures are likely to occur more frequently due to increases in drone speed, affecting mobility status evaluation and handover decisions. It is concluded that the possibility of using a drone's fixed flying path and location information to enable successful handovers, suggesting that when a drone's coordinates approach the cell edge, pre-emptive handover preparations could be initiated by the serving eNB (Evolved Node B or base station). The document lists specific mobility challenges related to increasing drone altitudes and speeds and introduces potential enhancements such as Time To Trigger (TTT) adjustments, measurement report enhancements, mobility control parameter optimization, handover strategies based on speed, and the utilization of beamforming technology to improve signal quality.

### SUMMARY

The object of the present invention is to provide a network access method, a terminal device and a computer-readable storage medium to enable a terminal device to select, based on an actual movement route of the terminal device, an access network device to perform network access, so as to reduce unnecessary measurement and reselection, thereby reducing a signaling exchange between the terminal and a network side, reducing battery power consumption of the terminal, and improving network access accuracy. This object is solved by the attached independent claims and further embodiments and improvements of the invention are listed in the attached dependent claims..

According to a first aspect according to the invention, the invention provides a network access method of a terminal device, and the method may be implemented by a terminal device. According to the method, the terminal device may obtain first information, where the first information includes network deployment information of one or more network cells, and the network deployment information of each network cell includes a correspondence between an area covered by the network cell and an identifier of the network cell; the terminal device determines one or more reported cells based on a movement route of the terminal device and the network deployment information of the one or more network cells, where the one or more reported cells include one or more of the one or more network cells; the terminal device sends second information to a first access network device, where the second information includes identifiers of the one or more reported cells; the terminal device receives third information from the first access network device, where the third information is used to search for and select a target cell, the third information includes an identifier of the target cell, and the one or more reported cells include the target cell; and the terminal device accesses the target cell based on the third information.

According to the foregoing method, the terminal device can select the one or more reported cells based on the movement route of the terminal device and the network deployment information of the one or more network cells, and then initiate a network cell handover process to request to be handed over to one of the one or more reported cells. The reported cell is selected based on the movement route of the terminal device and the network deployment information of the network cell, so that the reported cell better matches the movement route of the terminal device, and network access accuracy is improved. In addition, when accessing the target cell, the terminal device needs to search for and measure only the target cell included in the reported cell, and may not search for or measure a cell other than the reported cell, so that unnecessary measurement and reselection can be reduced. Therefore, a signaling exchange between the terminal and a network side is reduced, and battery power consumption of the terminal is reduced.

In a possible design, the first information may include a cell group identifier and a correspondence between the cell group identifier and a handover selection condition of each cell. According to this design, the terminal device may obtain the group identifier of the network cell and the handover selection condition of the network cell, to provide a support service for selecting and measuring an appropriate cell during a subsequent network handover.

In a possible design, the area covered by the network cell may include a route on which the terminal device is allowed to move, and deployment information of each network cell includes a correspondence between the information about the route on which the terminal device is allowed to move and an identifier of the network cell.

In a possible design, the information about the route on which the terminal device is allowed to move may include a geographical location corresponding to the route on which the terminal device is allowed to move.

In a possible design, the geographical location corresponding to the route on which the terminal device is allowed to move may include a name, an identifier, and/or a latitude and longitude corresponding to the route on which the terminal device is allowed to move.

In a possible design, the terminal device may determine, based on the network deployment information of the one or more network cells, one or more candidate cells whose coverage areas overlap the movement route of the terminal device, where the one or more network cells include the one or more candidate cells; and determine the one or more reported cells based on the one or more candidate cells, where the one or more reported cells include the one or more candidate cells. According to this design, the candidate cell overlaps the movement route of the terminal device, so that network cell handover accuracy is improved.

In a possible design, the terminal device may determine, based on signal strengths of the one or more candidate cells, another cell different from the one or more candidate cells in the one or more reported cells, where a difference between a signal strength of the another cell and the signal strength of each of the one or more candidate cells falls within a specific range, and an area covered by the another cell overlaps the movement route of the terminal device. According to this design, the another cell whose signal strength is close to that of the candidate cell and the candidate cell may be together selected as the reported cells, to improve a cell access success rate.

In a possible design, the third information further includes a part or all of information such as a frequency point of the target cell; a handover threshold of the target cell; a handover priority of the target cell; or a preamble of the target cell.

In a possible design, the terminal device may obtain the first information from the first access network device; the terminal device may receive a broadcast message, and obtain the first information from the broadcast message; or the terminal device may locally obtain the first information.

In a possible design, further steps of the method are implemented by a first access network device. According to the method, the first access network device may receive second information from a terminal device, where the second information includes identifiers of one or more reported cells; the first access network device selects a target cell from the one or more reported cells based on network performance of the one or more reported cells; and the first access network device sends third information to the terminal device, where the third information includes an identifier of the target cell, and the third information is used to search for and select the target cell.

In a possible design, the first access network device may select one target cell based on network performance of a plurality of reported cells. For example, the first access network device may separately measure the plurality of reported cells, and select the target cell based on signal strengths of the plurality of network cells. The target cell may be a reported cell having a greatest signal strength. The first access network device may determine, based on the identifier of the target cell, an access network device to which the target cell belongs. For example, the first access network device may select one target cell from a plurality of reported cells based on a local configuration. The local configuration herein includes but is not limited to a target cell selection rule configured in a first access network. According to this design, quality of service obtained after the terminal device accesses the target cell can be improved.

In a possible design, the first access network device may receive first information from a management device, where the first information includes network deployment information of one or more network cells, and the network deployment information of each network cell includes a correspondence between an area covered by the network cell and an identifier of the network cell; and send the first information.

In a possible design, the area covered by the network cell may include a route on which the terminal device is allowed to move, and deployment information of each network cell includes a correspondence between information about the route on which the terminal device is allowed to move and the identifier of the network cell.

In a possible design, the information about the route on which the terminal device is allowed to move may include a geographical location corresponding to the route on which the terminal device is allowed to move.

In a possible design, the geographical location corresponding to the route on which the terminal device is allowed to move may include a name, an identifier, and/or a latitude and longitude corresponding to the route on which the terminal device is allowed to move.

In a possible design, when sending the first information, the first access network device may send a broadcast message, where the broadcast message includes the first information; or the first access network device may send the first information to the terminal device.

In a possible design, if the first access network device sends the first information to the terminal device, before sending the first information to the terminal device, the first access network device may determine, based on a status feature of the terminal device, to send the first information to the terminal device, where the status feature includes a terminal type of the terminal device and/or a speed of the terminal device. According to this design, the first access network device may determine, based on the status feature of the terminal device, whether to send the first information. Therefore, signaling overheads can be reduced when the first information does not need to be sent.

In a possible design, when the target cell belongs to the first access network device, the first access network device may receive a first request from the terminal device, where the first request includes the identifier of the target cell; and enable, based on the first request, the terminal device to access the target cell. According to this design, the first access network device may enable the terminal device to access the target cell managed by the first access network device, so that efficiency of accessing the target cell by the terminal device is improved.

In a possible design, when the target cell belongs to a second access network device, the first access network device may send fourth information to the second access network device, where the fourth information includes a context of the terminal device and the identifier of the target cell, the context of the terminal device is used by the second access network device to determine the third information, and the third information is used by the terminal device to search for and select the target cell; and receive the third information from the second access network device. According to this design, the first access network device may indicate the terminal device to the second access network device to which the target cell belongs, so that the second access network device configures the third information based on the context of the terminal device, and the terminal device may access the target cell based on the third information. Therefore, efficiency of accessing the target cell by the terminal device is improved.

In a possible not claimed design, the third information further includes a part or all of information such as a frequency point of the target cell; a handover threshold of the target cell; a handover priority of the target cell; or a preamble of the target cell.

According to a third aspect wherein the third aspect is not claimed, this application provides a network access method of a terminal device, and the method may be implemented by a second access network device. According to the method, the second access network device may receive fourth information from a first access network device, where the fourth information includes a context of a terminal device and an identifier of a target cell, the context of the terminal device is used by the second access network device to determine third information, and the third information is used by the terminal device to search for and select the target cell; the second access network device sends the third information to the first access network device, where the third information includes the identifier of the target cell, and the target cell belongs to the second access network device; the second access network device receives a second request of the terminal device, where the second request includes the identifier of the target cell; and the second access network device enables, based on the second request, the terminal device to access the target cell.

In a possible design, the third information further includes a part or all of information such as a frequency point of the target cell; a handover threshold of the target cell; a handover priority of the target cell; or a preamble of the target cell.

According to anon-claimed fourth aspect, this application provides a network access method of a terminal device, and the method may be implemented by a management device. According to the method, the management device may determine first information, where the first information includes network deployment information of one or more network cells, and the network deployment information of each network cell includes a correspondence between an area covered by the network cell and an identifier of the network cell; and
the management device sends the first information to an access network device.

In a possible design, the area covered by the network cell may include a route on which the terminal device is allowed to move, and deployment information of each network cell includes a correspondence between information about the route on which the terminal device is allowed to move and the identifier of the network cell.

In a possible design, the information about the route on which the terminal device is allowed to move may include a geographical location corresponding to the route on which the terminal device is allowed to move.

In a possible design, the geographical location corresponding to the route on which the terminal device is allowed to move may include a name, an identifier, and/or a latitude and longitude corresponding to the route on which the terminal device is allowed to move.

In a possible design, the management device may receive, from a network exposure function network element, the information about the route on which the terminal device is allowed to move.

In the foregoing possible design, the management device may be an access network device operation, administration and maintenance (RAN operation, administration and maintenance, RAN OAM) network element. A geographical location (for example, information about an identifier, a name, and/or a latitude and longitude of the geographical location) of a cell in an area managed by the RAN OAM may be configured in the RAN OAM. Then, the RAN OAM may mark, in a current scenario or area based on the obtained information about the route on which the terminal device is allowed to move, one or more network cells that overlap the route on which the terminal device is allowed to move. The RAN OAM may further generate the first information by associating, based on cell identifiers of the one or more network cells and a geographical location of the route that is covered by each network cell and on which the terminal device is allowed to move.

According to a fifth aspect according to the invention, the invention provides a communication apparatus constituted by the terminal device. The communication apparatus may be configured to perform the steps performed by the terminal device according to any one of the first aspect or the implementations of the first aspect. The communication apparatus may implement functions in the foregoing methods in a form of a hardware structure, a software module, or a combination of a hardware structure and a software module. For example, when the communication apparatus includes software modules, the communication module may include a communication module and a processing module that are coupled to each other. When the communication apparatus includes hardware components, the communication apparatus may include a transceiver, a memory, a processor, and the like that are coupled to each other.

During execution of the method according to the first aspect, the processing module may be configured to obtain first information, where the first information includes network deployment information of one or more network cells, and the network deployment information of each network cell includes a correspondence between an area covered by the network cell and an identifier of the network cell. The processing module may be further configured to determine one or more reported cells based on a movement route of the terminal device and the network deployment information of the one or more network cells, where the one or more reported cells include one or more of the one or more network cells. The communication module may be configured to send second information to a first access network device, where the second information includes identifiers of the one or more reported cells. The communication module may be further configured to receive third information from the first access network device, where the third information is used to search for and select a target cell, the third information includes an identifier of the target cell, and the one or more reported cells include the target cell. The processing module may be further configured to access the target cell based on the third information.

In a possible design, the area covered by the network cell may include a route on which the terminal device is allowed to move, and deployment information of each network cell includes a correspondence between information about the route on which the terminal device is allowed to move and the identifier of the network cell.

In a possible design, the information about the route on which the terminal device is allowed to move may include a geographical location corresponding to the route on which the terminal device is allowed to move.

In a possible design, the geographical location corresponding to the route on which the terminal device is allowed to move may include a name, an identifier, and/or a latitude and longitude corresponding to the route on which the terminal device is allowed to move.

In a possible design, when determining the one or more reported cells based on the movement route of the terminal device and the network deployment information of the one or more network cells, the processing module may be specifically configured to: determine, based on the network deployment information of the one or more network cells, one or more candidate cells whose coverage areas overlap the movement route of the terminal device, where the one or more network cells include the one or more candidate cells; and determine the one or more reported cells based on the one or more candidate cells, where the one or more reported cells include the one or more candidate cells.

In a possible design, when determining the one or more reported cells based on the one or more candidate cells, the processing module may be specifically configured to determine, based on signal strengths of the one or more candidate cells, another cell different from the one or more candidate cells in the one or more reported cells, where a difference between a signal strength of the another cell and the signal strength of each of the one or more candidate cells falls within a specific range, and an area covered by the another cell overlaps the movement route of the terminal device.

In a possible design, the third information may further include a part or all of the following information such as a frequency point of the target cell; a handover threshold of the target cell; a handover priority of the target cell; or a preamble of the target cell.

In a possible design, when obtaining the first information, the processing module may be specifically configured to: obtain the first information based on a message from the first access network device, where the message from the first access network device is received by the communication module; obtain the first information based on a broadcast message, where the broadcast message is received by the communication module; or locally obtain the first information.

In addition, when the foregoing communication apparatus is implemented by using the hardware components, the communication apparatus may include the processor and the transceiver. The processor may perform the steps performed by the foregoing processing module, and the transceiver may perform the steps performed by the foregoing communication module. When the foregoing communication apparatus is implemented by using the hardware components, the communication apparatus may further include the memory. The memory is configured to store a program, where the program is executed by the processor to perform the steps performed by the foregoing processing module.

According to a sixth aspect a not claimed embodiment provides another communication apparatus. The communication apparatus may be configured to perform the steps performed by the first access network device according to any one of the second aspect or the implementations of the second aspect. The communication apparatus may implement functions in the foregoing methods in a form of a hardware structure, a software module, or a combination of a hardware structure and a software module. For example, when the communication apparatus includes software modules, the communication module may include a communication module and a processing module that are coupled to each other. When the communication apparatus includes hardware components, the communication apparatus may include a transceiver, a memory, a processor, and the like that are coupled to each other.

During execution of the method according to the second aspect, the communication module may be configured to receive second information from a terminal device, where the second information includes identifiers of one or more reported cells; the processing module may be configured to select a target cell from the one or more reported cells based on network performance of the one or more reported cells or based on a local configuration; and the communication module may be further configured to send third information to the terminal device, where the third information includes an identifier of the target cell, and the third information is used to search for and select the target cell.

In a possible design, the communication module may be further configured to: receive first information from a management device, where the first information includes network deployment information of one or more network cells, and the network deployment information of each network cell includes a correspondence between an area covered by the network cell and an identifier of the network cell; and send the first information.

In a possible design, the area covered by the network cell may include a route on which the terminal device is allowed to move, and deployment information of each network cell includes a correspondence between information about the route on which the terminal device is allowed to move and the identifier of the network cell.

In a possible design, the information about the route on which the terminal device is allowed to move may include a geographical location corresponding to the route on which the terminal device is allowed to move.

In a possible design, the geographical location corresponding to the route on which the terminal device is allowed to move may include a name, an identifier, and/or a latitude and longitude corresponding to the route on which the terminal device is allowed to move.

In a possible design, when sending the first information, the communication module may be specifically configured to: send a broadcast message, where the broadcast message includes the first information; or send the first information to the terminal device.

In a possible design, if the communication module sends the first information to the terminal device, the processing module may be further configured to determine, based on a status feature of the terminal device, to send the first information to the terminal device, where the status feature includes a terminal type of the terminal device and/or a speed of the terminal device.

For example, when the target cell belongs to the first access network device, the communication module may be further configured to receive a first request from the terminal device, where the first request includes the identifier of the target cell; and the processing module may be further configured to enable, based on the first request, the terminal device to access the target cell.

In a possible design, when the target cell belongs to a second access network device, the communication module may be further configured to: send fourth information to the second access network device, where the fourth information includes a context of the terminal device and the identifier of the target cell, the context of the terminal device is used by the second access network device to determine the third information, and the third information is used by the terminal device to search for and select the target cell; and receive the third information from the second access network device.

In a possible design, the third information may further include a part or all of the following information such as a frequency point of the target cell; a handover threshold of the target cell; a handover priority of the target cell; or a preamble of the target cell.

In addition, when the foregoing communication apparatus is implemented by using the hardware components, the communication apparatus may include the processor and the transceiver. The processor may perform the steps performed by the foregoing processing module, and the transceiver may perform the steps performed by the foregoing communication module. When the foregoing communication apparatus is implemented by using the hardware components, the communication apparatus may further include the memory. The memory is configured to store a program, where the program is executed by the processor to perform the steps performed by the foregoing processing module.

According to a seventh not claimed aspect, this application provides a communication apparatus. The communication apparatus may be configured to perform the steps performed by the second access network device according to any one of the third aspect or the implementations of the third aspect. The communication apparatus may implement functions in the foregoing methods in a form of a hardware structure, a software module, or a combination of a hardware structure and a software module. For example, when the communication apparatus includes software modules, the communication module may include a communication module and a processing module that are coupled to each other. When the communication apparatus includes hardware components, the communication apparatus may include a transceiver, a memory, a processor, and the like that are coupled to each other.

During execution of the method according to the third aspect, the communication module may be configured to receive fourth information from a first access network device, where the fourth information includes a context of a terminal device and an identifier of a target cell, the context of the terminal device is used by the second access network device to determine third information, the third information is used by the terminal device to search for and select the target cell, the third information includes the identifier of the target cell, and the target cell belongs to the second access network device. The communication module may be further configured to send the third information to the first access network device, where the third information includes the identifier of the target cell, and the target cell belongs to the second access network device. The communication module may be further configured to receive a second request of the terminal device, where the second request includes the identifier of the target cell. The processing module may be configured to enable, based on the second request, the terminal device to access the target cell.

In a possible design, the third information may further include a part or all of the following information such as a frequency point of the target cell; a handover threshold of the target cell; a handover priority of the target cell; or a preamble of the target cell.

In addition, when the foregoing communication apparatus is implemented by using the hardware components, the communication apparatus may include the processor and the transceiver. The processor may perform the steps performed by the foregoing processing module, and the transceiver may perform the steps performed by the foregoing communication module. When the foregoing communication apparatus is implemented by using the hardware components, the communication apparatus may further include the memory. The memory is configured to store a program, where the program is executed by the processor to perform the steps performed by the foregoing processing module.

According to an eighth not claimed aspect, this application provides a communication apparatus. The communication apparatus may be configured to perform the steps performed by the management device according to any one of the fourth aspect or the implementations of the fourth aspect. The communication apparatus may implement functions in the foregoing methods in a form of a hardware structure, a software module, or a combination of a hardware structure and a software module. For example, when the communication apparatus includes software modules, the communication module may include a communication module and a processing module that are coupled to each other. When the communication apparatus includes hardware components, the communication apparatus may include a transceiver, a memory, a processor, and the like that are coupled to each other.

During execution of the method according to the fourth aspect, the processing module may be configured to determine first information, where the first information includes network deployment information of one or more network cells, and the network deployment information of each network cell includes a correspondence between an area covered by the network cell and an identifier of the network cell. The communication module may be configured to send the first information to an access network device.

In a possible design, the area covered by the network cell may include a route on which a terminal device is allowed to move, and deployment information of each network cell includes a correspondence between information about the route on which the terminal device is allowed to move and the identifier of the network cell.

In a possible design, the information about the route on which the terminal device is allowed to move may include a geographical location corresponding to the route on which the terminal device is allowed to move.

In a possible design, the geographical location corresponding to the route on which the terminal device is allowed to move may include a name, an identifier, and/or a latitude and longitude corresponding to the route on which the terminal device is allowed to move.

In a possible design, the communication module may be further configured to receive, from a network exposure function network element, the information about the route on which the terminal device is allowed to move.

In addition, when the foregoing communication apparatus is implemented by using the hardware components, the communication apparatus may include the processor and the transceiver. The processor may perform the steps performed by the foregoing processing module, and the transceiver may perform the steps performed by the foregoing communication module. When the foregoing communication apparatus is implemented by using the hardware components, the communication apparatus may further include the memory. The memory is configured to store a program, where the program is executed by the processor to perform the steps performed by the foregoing processing module.

According to a ninth not claimed aspect, this application provides a communication system, and the communication system may include the communication apparatuses/communication apparatus according to the fifth aspect, the sixth aspect, the seventh aspect, and/or the eighth aspect.

According to a tenth aspect according to the invention, the invention also provides a computer-readable storage medium, and the computer storage medium stores instructions (or referred to as a program). When the instructions are invoked and executed on a computer, the computer is enabled to perform the method according to any one of the first aspect or the possible designs of the first aspect; or configured to perform the method according to any one of the second aspect or the possible designs of the second aspect; or configured to perform the method according to any one of the third aspect or the possible designs of the third aspect; or configured to perform the method according to any one of the fourth aspect or the possible designs of the fourth aspect.

According to an eleventh not claimed aspect, this application provides a computer program product, and the computer program product may include instructions. When the computer program product runs on a computer, the computer is enabled to perform the method according to any one of the first aspect or the possible designs of the first aspect; or configured to perform the method according to any one of the second aspect or the possible designs of the second aspect; or configured to perform the method according to any one of the third aspect or the possible designs of the third aspect; or configured to perform the method according to any one of the fourth aspect or the possible designs of the fourth aspect.

According to a twelfth not claimed aspect, this application provides a chip or a chip system including the chip, and the chip may include a processor. The chip may further include a memory (or a storage module) and/or a transceiver (or a communication module). The chip may be configured to perform the method according to any one of the first aspect or the possible designs of the first aspect; or configured to perform the method according to any one of the second aspect or the possible designs of the second aspect; or configured to perform the method according to any one of the third aspect or the possible designs of the third aspect; or configured to perform the method according to any one of the fourth aspect or the possible designs of the fourth aspect. The chip system may include the foregoing chip, or may include the foregoing chip and another discrete component, such as a memory (or a storage module) and/or a transceiver (or a communication module).

For beneficial effects of the fifth aspect to the twelfth aspect and the possible designs of the fifth aspect to the twelfth aspect, refer to descriptions of the beneficial effects of the method according to any one of the first aspect or the possible designs of the first aspect, or descriptions of the beneficial effects of the method according to any one of the second aspect or the possible designs of the second aspect, or descriptions of the beneficial effects of the method according to any one of the third aspect or the possible designs of the third aspect, or description of the beneficial effects of the method according to any one of the fourth aspect or the possible designs of the fourth aspect.

### BRIEF DESCRIPTION OF DRAWINGS

FIG. 1 is a schematic diagram of an architecture of a wireless communication system to which an embodiment of this application is applicable;
FIG. 2 is a schematic diagram of an architecture of a wireless communication system to which an embodiment of this application is applicable;
FIG. 3 is a schematic diagram of an architecture of a wireless communication system to which an embodiment of this application is applicable;
FIG. 4 is a schematic diagram of an architecture of a wireless communication system to which an embodiment of this application is applicable;
FIG. 5 is a schematic flowchart of a network access method of a terminal device according to an embodiment of the invention;
FIG. 6 is a schematic diagram of a movement route of a terminal device according to an embodiment of this application;
FIG. 7 is a schematic flowchart of a network access method of a terminal device according to an embodiment of the invention;
FIG. 8 is a schematic flowchart of a network access method of a terminal device according to an embodiment of this application;
FIG. 9 is a schematic diagram of a structure of a communication apparatus according to an embodiment of this application;
FIG. 10 is a schematic diagram of a structure of a communication apparatus according to an embodiment of this application;
FIG. 11 is a schematic diagram of a structure of another communication apparatus according to an embodiment of this application;
FIG. 12 is a schematic diagram of a structure of another communication apparatus according to an embodiment of this application;
FIG. 13 is a schematic diagram of a structure of another communication apparatus according to an embodiment of this application;
FIG. 14 is a schematic diagram of a structure of another communication apparatus according to an embodiment of this application; and
FIG. 15 is a schematic diagram of a structure of another communication apparatus according to an embodiment of this application.

In the following description, features which in the above summary of the invention have been marked as "not claimed" or "according to the invention" are also hereinafter, when they are described and explained with reference to the drawings, to be understood as "not claimed" or "not part of the invention" or "according to the invention".

### DESCRIPTION OF EMBODIMENTS

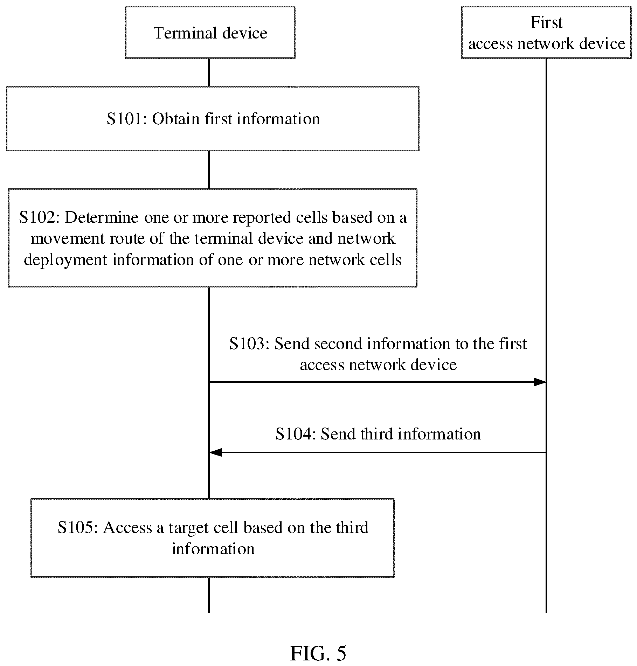

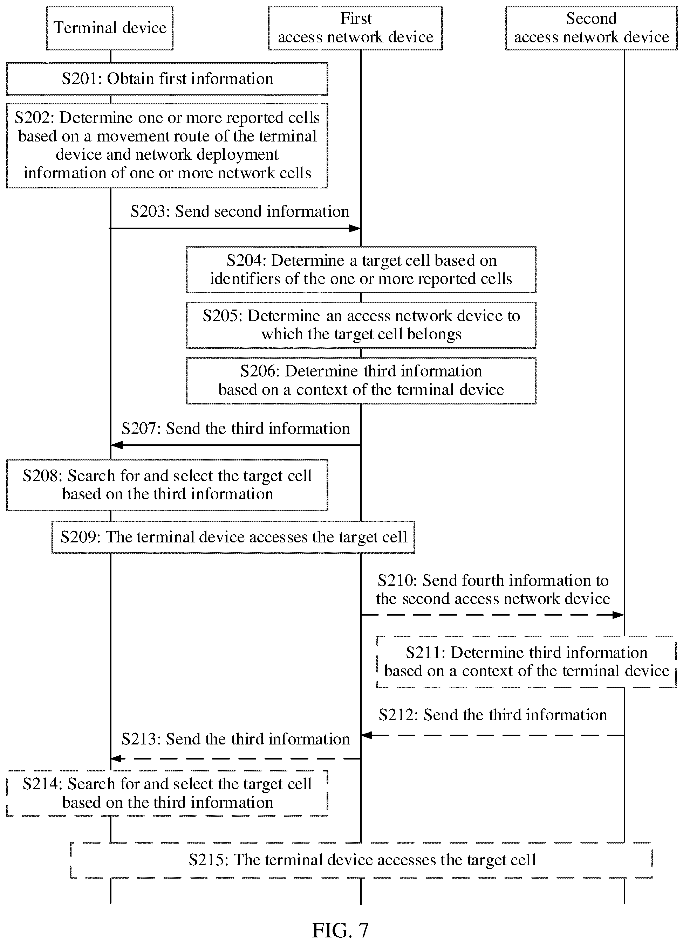

To make the objectives, technical solutions, and advantages of this application clearer, the following further describes this application in detail with reference to the accompanying drawings. A specific operation method in a method embodiment may also be applied to an apparatus embodiment or a system embodiment. The claimed invention is described with reference to FIG. 5 and FIG. 7, while the description of the remaining figures relates to unclaimed subject-matter and is provided here merely for illustrative purposes for a better understanding of the invention as claimed.

The following explains terms in this application.

"At least one" means one or more, that is, one, two, three, or more.

"A plurality of" means two or more, that is, two, three, or more.

Carrying may mean that a message is used to carry information or data, or may mean that a message includes information.

Coupling is indirect coupling or a communication connection between apparatuses, units, or modules, may be in an electrical form, a mechanical form, or another form, and is used for exchanging information between the apparatuses, the units, or the modules.

In addition, it should be understood that in embodiments of this application, the term "and/or" describes an association relationship between associated objects and may indicate three relationships. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of the following, and includes any combination of one or more of the following. For example, at least one of a, b, or c may indicate a, b, c, a and b, a and c, b and c, or a, b, and c, where a, b, and c may be singular or plural.

The following describes the embodiments of this application in detail with reference to the accompanying drawings. First, a wireless communication system to which the embodiments of this application can be applied is described, then a network access method of a terminal device provided in the embodiments of this application is described, and finally a communication apparatus provided in the embodiments of this application is described.

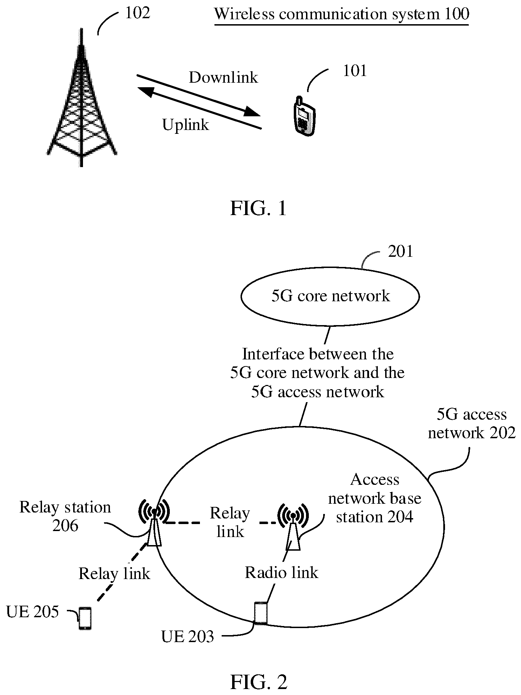

As shown in FIG. 1, a wireless communication system 100 according to an embodiment of this application may include a terminal device 101 and a network device 102.

It should be understood that the wireless communication system 100 according to this embodiment of this application is applicable to both a low-frequency scenario (sub 6G) and a high-frequency scenario (above 6G). Application scenarios of the wireless communication system 100 provided in this embodiment of this application include but are not limited to a global system for mobile communications (global system for mobile communications, GSM), a code division multiple access (code division multiple access, CDMA) system, a wideband code division multiple access (wideband code division multiple access, WCDMA) system, a general packet radio service (General Packet Radio Service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation system, a new radio (new radio, NR) system, and the like.

The terminal device 101 shown above may include a terminal device in a 5G vertical service scenario. Specifically, the terminal device 101 may be a device such as user equipment, a terminal (terminal), a mobile station (mobile station, MS), or a mobile terminal (mobile terminal). The terminal device 101 can communicate with one or more network devices of one or more communication systems, and accepts a network service provided by the network device. The network device herein includes but is not limited to the network device 102 shown in the figure. For example, in this embodiment of this application, the terminal device 101 may be a mobile phone (or referred to as a "cellular" phone), a computer having a mobile terminal, or the like. Alternatively, the terminal device 101 may be a portable, pocket-sized, handheld, computer built-in, or in-vehicle mobile apparatus. Alternatively, the terminal device 101 may be a communication chip having a communication module.

The network device 102 shown above may include an access network device (or referred to as an access network site) described in this application. Specifically, the network device 102 may include the access network device. In this application, the access network device is a device that provides a network access function, for example, a radio access network (radio access network, RAN) base station. The network device 102 may specifically include a base station (base station, BS), or include a base station, a radio resource management device configured to control the base station, and the like. The network device 102 may be a relay station (relay device), an access point, a vehicle-mounted device, a wearable device, a base station in a future 5G network, a base station in a future evolved public land mobile network (public land mobile network, PLMN), an NR base station, or the like. This is not limited in this embodiment of this application. Alternatively, the network device 102 may be a communication chip having a communication module.

In an execution process of the method in this application, the network device 102 may serve as a RAN base station to provide a wireless network connection to the terminal device 101. For example, the network device 102 may serve as an access network base station in a 4G access network, namely, an evolved universal mobile telecommunications system (universal mobile telecommunications system, UMTS) terrestrial radio access network (evolved UMTS terrestrial radio access network, E-UTRAN); or the network device 102 may serve as an access network base station in a 5G access network, namely, a 5G RAN; or the network device 102 may serve as an access network base station in a future wireless communication system.

The following describes a possible wireless communication system in an embodiment of this application by using a 5G core network as an example. As shown in FIG. 2, an example of a 5G wireless communication system may include a 5G core network 201, and the wireless communication system may further include a 5G access network 202. Interaction between the 5G core network 201 and the 5G access network 202 may be implemented through a communication interface. In a scenario of the wireless communication system, a functional entity configured to implement the method in the embodiments of this application may be a network element and/or a terminal device in the 5G core network 201. Specifically, the terminal device 101 in the embodiments of this application may include a terminal device connected to a base station in the 5G access network 202, for example, UE 203 shown in FIG. 2. The UE 203 is connected to an access network base station 204 through a radio link. The access network base station 204 may be a base station in the 5G access network 202. The terminal device 101 in the embodiments of this application may further include UE connected to a relay, for example, UE 205 shown in FIG. 2. The UE 205 is connected to a relay station 206, and the relay station 206 is connected to the access network base station 204 through a relay link. The network device 102 in the embodiments of this application may be the access network base station 204 in the 5G access network 202 shown in FIG. 2, or may be the relay station 206 connected to the access network base station 204 shown in FIG. 2.

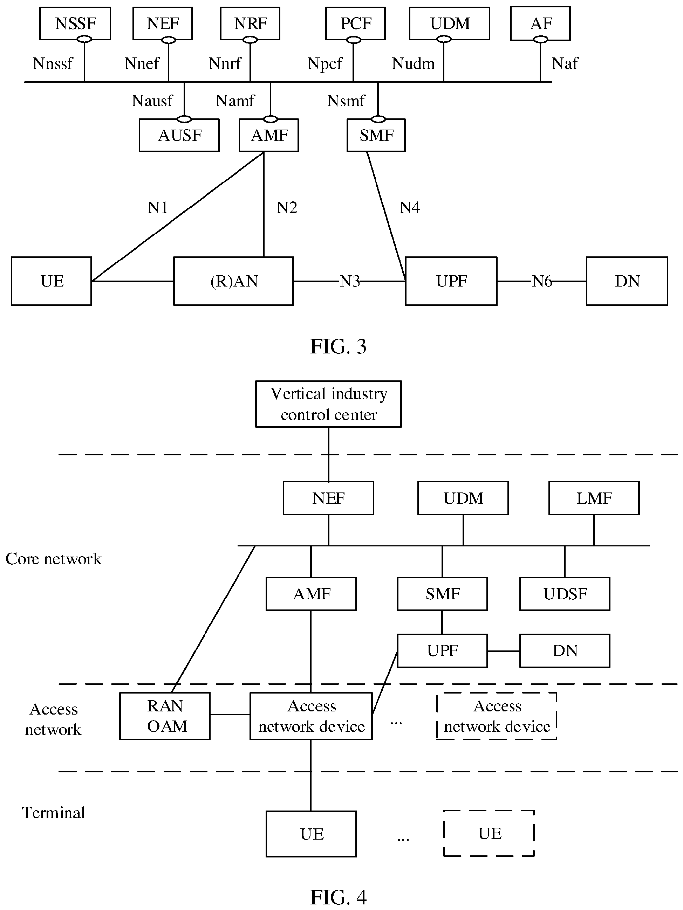

The following further describes a network architecture of a wireless communication system according to an embodiment of this application. FIG. 3 is a schematic diagram of a service-based 5G network architecture. The 5G network architecture may include three parts, which are respectively a terminal device, a data network (data network, DN), and a carrier network. The carrier network may include the 5G core network 201 and the 5G access network 202 shown in FIG. 2.

The carrier network may include a network slice selection (network slice selection function, NSSF) network element, a network exposure function (network exposure function, NEF) network element, a network repository function (network repository function, NRF) network element, a policy control function (policy control function, PCF) network element, a unified data management (unified data management, UDM) network element, an application function (application function, AF) network element, an authentication server function (authentication server function, AUSF) network element, an access and mobility management function (access and mobility management function, AMF) network element, a session management function (session management function, SMF) network element, a (radio) access network ((radio) access network, (R)AN), a user plane function (user plane function, UPF) network element, and the like. In the foregoing carrier network, a part other than the (radio) access network may be referred to as a core network (CN). For ease of description, an example in which the (R)AN is referred to as a RAN is used below for description.

The UE shown in FIG. 3 may be a device having wireless transmission and reception functions. The UE may be deployed on land, and includes an indoor device or an outdoor device, a handheld device, or a vehicle-mounted device; or may be deployed on a water surface (for example, a ship); or may be deployed in air (for example, an airplane, a balloon, or a satellite). The UE may be a mobile phone (mobile phone), a tablet (pad), a computer having wireless transmission and reception functions, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. The terminal device 101 shown in this application may include the UE shown in FIG. 3.

The terminal device may establish a connection to the carrier network through a communication interface (for example, N1) provided by the carrier network, and use services such as data and/or voice provided by the carrier network. The terminal device may further access the DN through the carrier network, and use a carrier service deployed on the DN and/or a service provided by a third party. The third party may be a service provider other than the carrier network and the terminal device, and may provide services such as data and/or voice for the terminal device. A specific representation form of the foregoing third party may be specifically determined based on an actual application scenario, and is not limited herein.

The access network device is a device that provides a wireless communication function for a terminal. The access network device includes but is not limited to: a next generation NodeB (gNodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB, HNB), a baseband unit (baseband unit, BBU), a transmission reception point (transmission reception point, TRP), a transmission point (transmission point, TP), a mobile switching center, and the like in 5G.

The foregoing network slice selection network element is configured to flexibly select a network slice. For example, the network slice selection network element may support a slice selection policy based on a plurality of types of information such as network slice selection assistance information (network slice selection assistance information, NSSAI), location information, or slice load information. An intelligent slice selection solution may be implemented according to the slice selection policy. The network slice selection network element may store information such as a slice selection policy configured by a carrier. In 5G, the network slice selection network element may be the NSSF network element. In future communication such as 6G, the network slice selection network element may still be the NSSF network element or have another name. This is not limited in this application.

The mobility management network element shown above is a control plane network element provided by the carrier network, and is responsible for access control and mobility management on access of the terminal device to the carrier network, for example, including functions such as mobility status management, temporary user identity assignment, and user authentication and authorization. In 5G, the mobility management network element may be the AMF network element. In future communication such as 6th generation (6th generation, 6G), the mobility management network element may still be the AMF network element or have another name. This is not limited in this application.

The session management network element shown above is a control plane network element provided by the carrier network, and is responsible for managing a protocol data unit (protocol data unit, PDU) session of the terminal device. The PDU session is a channel used to transmit a PDU. The PDU needs to be transmitted between the terminal device and the DN through the PDU session. The SMF network element is responsible for establishment, maintenance, deletion, and the like of the PDU session. The SMF network element includes session-related functions such as session management (for example, session establishment, modification, and release, including tunnel maintenance between the UPF and the RAN), selection and control of the UPF network element, service and session continuity (Service and Session Continuity, SSC) mode selection, and roaming. In 5G, the session management network element may be the SMF network element. In future communication such as 6G, the session management network element may still be the SMF network element or have another name. This is not limited in this application.

The user plane network element shown above is a gateway provided by a carrier, and is a gateway for communication between the carrier network and the DN. The UPF network element includes user plane-related functions such as data packet routing and transmission, packet detection, service usage reporting, quality of service (Quality of Service, QoS) processing, lawful interception, uplink packet detection, and downlink data packet storage. In 5G, the user plane network element may be the UPF network element. In future communication such as 6G, the user plane network element may still be the UPF network element or have another name. This is not limited in this application.

The DN may also be referred to as a packet data network (packet data network, PDN), and is a network located outside the carrier network. The carrier network may be connected to a plurality of DNs, and a plurality of services may be deployed on the DNs, to provide services such as data and/or voice for the terminal device. For example, the DN is a private network of a smart factory, a sensor installed in a workshop of the smart factory may be the terminal device, a control server of the sensor is deployed in the DN, and the control server may provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be the terminal device, and the mobile phone or the computer of the employee may access information, data resources, and the like on the internal office network of the company.

In this application, the data management network element is a control plane network element provided by a carrier, and is responsible for storing information such as a subscription permanent identifier (subscription permanent identifier, SUPI), a credential (credential), a security context (security context), and subscription data of a subscriber in the carrier network. The information stored in the UDM network element may be used for authentication and authorization when the terminal device accesses the carrier network. The subscriber in the carrier network may be specifically a subscriber using a service provided by the carrier network, for example, a user using a SIM card of China Telecom, or a user using a SIM card of China Mobile. The SUPI of the subscriber may be a number of the SIM card, or the like. The credential and the security context of the subscriber may be stored small files such as an encryption key of the SIM card or information related to encryption of the SIM card, and are used for authentication and/or authorization. The security context may be cookie (cookie), a token (token), or the like stored in a local terminal (for example, a mobile phone) of the subscriber. The subscription data of the subscriber may be a supporting service of the SIM card, for example, a traffic package or a used network of the SIM card. It should be noted that the permanent identifier, the credential, the security context, the cookie (cookie), and the token are equivalent to information related to authentication and authorization, and are not limited or distinguished between each other for ease of description in this application document of the present invention. Unless otherwise specified, the security context is used as an example for description in this embodiment of this application. However, this embodiment of this application is also applicable to authentication and/or authorization information described in another manner. In 5G, the data management network element may be the UDM network element. In future communication such as 6G, the data management network element may still be the UDM network element or have another name. This is not limited in this application.

In this application, the network exposure network element is a control plane network element provided by a carrier. The NEF network element securely exposes an external communication interface of the carrier network to a third party. When the SMF network element needs to communicate with a third-party network element, the NEF network element may serve as a relay for communication between the SMF network element and the third-party network element. When the NEF network element serves as the relay, the NEF network element may translate identification information of a subscriber and identification information of the third-party network element. For example, when the NEF needs to send an SUPI of the subscriber from the carrier network to the third party, the NEF may translate the SUPI into an external identity (identity, ID) corresponding to the subscriber. When the NEF network element sends the external ID (an ID of the third-party network element) to the carrier network, the NEF network element may translate the external ID into the SUPI. In 5G, the network exposure network element may be the NEF network element. In future communication such as 6G, the network exposure network element may still be the NEF network element or have another name. This is not limited in this application.

In this application, the policy control network element is a control plane function provided by a carrier, and is configured to provide a policy of a PDU session for the SMF network element. The policy may include a charging-related policy, a QoS-related policy, an authorization-related policy, and the like. In 5G, the policy control network element may be the PCF network element. In future communication such as 6G, the policy control network element may still be the PCF network element or have another name. This is not limited in this application.

In FIG. 3, Nnssf, Nnef, Nausf, Nnrf, Npcf, Nudm, Naf, Namf, Nnvaf, Nsmf, N1, N2, N3, N4, and N6 are communication interface sequence numbers. For meanings of the communication interface sequence numbers, refer to meanings defined in the 3GPP standard protocol. This is not limited herein.

A network vision perception network element in this application may be the NVAF network element shown in FIG. 3, or may be a network element that is in a future communication system and that has a function of the NVAF network element. The access network device in this application may be the RAN device in FIG. 3, or may be a network element that is in a future communication system and that has a function of the RAN device.

For ease of description, in this application, the AMF network element is referred to as an AMF for short, the NVAF network element is referred to as an NVAF for short, the RAN device is referred to as a RAN for short, and the terminal device is referred to as UE below.

It should be understood that the network device 102 shown in FIG. 1 may serve as an access network device in the (R)AN in the 5G wireless communication system shown in FIG. 3, and the terminal device 101 may access the 5G network through the network device 102.

In addition, the network access method of a terminal device provided in the embodiments of this application may be further applied to a 5G vertical service scenario, and a wireless communication system in this scenario may have an architecture shown in FIG. 4.

A vertical industry control center (which may also be referred to as a control center) is a management device that is in a vertical industry (for example, in a 5G vertical industry) and that is configured to control a movement route, a movement speed, and the like of a controlled terminal device. The vertical industry control center may be configured to separately formulate a movement route and a movement speed of the terminal device for the terminal device based on information such as a type of the terminal device or an identifier of the terminal device (which is used to identify the terminal device), so that the terminal device moves or performs a corresponding operation according to a preset rule. The vertical industry control center may further specify the movement speed of the terminal device and a time point at which the terminal device starts to move, to control the terminal device to move into and/or move out of a specific area at a predetermined moment. For example, the vertical industry control center may be connected to an NEF through an external communication interface provided by the NEF.

In this application, 5G vertical industries include but are not limited to a port, a railway, a factory, and the like. Terminal devices in the 5G vertical industries may include a mobile robot (mobile robot), an automated guided vehicle (automated guided vehicle, AGV), a sensor, and a device on a movable apparatus such as a control device, a vehicle (vehicle), a trainset, an aircraft, or a vessel that are used in the foregoing industries. It should be understood that the network access method of a terminal device provided in the embodiments of this application may be applied to a terminal device network access scenario in a 5G vertical industry such as a smart factory or intelligent transportation, or may be applied to a terminal device network access scenario in a non-5G vertical industry, for example, network access of a vehicle-mounted device in a road or railway transportation scenario in the non-5G vertical industry. This is not specifically limited in this application.

Using FIG. 4 as an example, UE in the 5G vertical industry may access an AMF in a core network through an access network device (for example, a RAN site), to obtain a network service. In the 5G vertical industry scenario, the UE herein may be of different types. For example, the UE may be a non-mobile device or a mobile device, or may be a vehicle, an aircraft, or a robot. The type of the UE is related to a behavior feature of the terminal device. For example, if the UE is a non-mobile device, a device that moves relatively slowly, or a device that moves for a relatively short distance, the UE generally does not perform handover between access network devices. For example, the vertical industry control center may identify the type of the UE by using a type identifier or other type information of the UE. In addition, the type of the UE may be further distinguished based on a group identifier (group ID) of the UE. For example, the vertical industry control center may configure a same group identifier for UEs of a same type, or may use the type identifier of the UE or an identifier corresponding to the type identifier as the group identifier.

It should be understood that a quantity of UEs in the vertical industry is not limited in this application. A limited quantity of UEs in the vertical industry shown in FIG. 4 is merely an example for description, and should not be construed as a limitation on implementation of this application. In addition, a manner in which UE is connected to an access network device in a vertical industry is not limited in this application. For example, each UE may be connected to one access network device, or a plurality of UEs may be connected to a same access network device. A connection relationship between the UE and the access network device shown in FIG. 4 is merely an example, and should not be construed as a limitation on the implementations of this application.

An unstructured data storage function (unstructured data storage function, UDSF) shown in FIG. 4 may be used to support a network function (network function, NF) in storing and retrieving information as unstructured data.

A unified data repository (unified data repository, UDR) shown in FIG. 4 may be configured to: support a UDM in storing and retrieving user data, support a PCF in storing and retrieving policy data or in storing and retrieving structured data for exposure, and the like.

A location management function (location management function, LMF) shown in FIG. 4 may be used to: support UE location determining, obtain downlink location measurement or location estimation from UE, obtain uplink location measurement from a RAN, obtain non-UE-related auxiliary data from an NG RAN, or the like.

For descriptions of the AMF, an SMF, a UPF, the NEF, and a DN shown in FIG. 4, refer to the foregoing descriptions of the AMF, the SMF, the UPF, the NEF, and the DN in FIG. 3.

The wireless communication system shown in FIG. 4 may further include a management device, which is also referred to as an access network device management device, for example, a RAN operation, administration and maintenance (operation, administration and maintenance, OAM) device (or referred to as an OAM). In this application, the management device may interact with the NEF through a communication interface between the management device and the NEF. The management device may further be connected to the RAN device through a communication interface. It should be understood that, in this application, the RAN OAM is used as an example to describe an operation performed by the management device. However, it should not be understood that during implementation of this application, only the RAN OAM can be used as the management device. In 5G or future communication such as 6G, the management device may still be a RAN OAM network element or have another name. This is not limited in this application.

It should be understood that the network device 102 shown in FIG. 1 may serve as the (R)AN in the wireless communication system shown in FIG. 3, and the terminal device 101 may access the 5G network, for example, the 5G core network and/or the DN through the network device 102. The network device 102 shown in FIG. 1 may serve as the access network device in the wireless communication system shown in FIG. 4, and the terminal device 101 may access the 5G network, for example, the 5G core network and/or the DN through the network device 102.

Using the communication system shown in FIG. 4 as an example, UE in a vertical industry may perform handover (handover) between access network devices. For example, because a location of the UE moves, the UE may be handed over from one access network device to another access network device. In this application, the access network device connected to the UE before the handover may be referred to as a first access network device, and the access network device connected to the UE after the handover may be referred to as a second access network device. If the first access network device and the second access network device are a same access network device, the UE performs cell handover only among a plurality of cells managed by the access network device. If the first access network device and the second access network device are different access network devices, the UE performs access network device handover among a plurality of access network devices.

The architecture shown in FIG. 4 is a network architecture when the method provided in this application is applied to the 5G vertical industry scenario. It should be understood that the method provided in this application is not limited to being implemented only in the scenario shown in the architecture. For example, the method provided in this application may be further applied to a public transportation scenario, for example, intelligent transportation in a scenario such as a railway or a highway. In this case, the vertical industry control center in the architecture shown in FIG. 4 may be replaced with a public transportation control center or a device having another name. The device may store a geographical location of a road and/or an area on/in which the terminal device can move in the scenario. It should be understood that the vertical industry control center in the following descriptions of the method embodiments may be replaced with the public transportation control center.

As shown in FIG. 5, a network access method of a terminal device according to an embodiment of the invention includes the following steps.

S101: A terminal device obtains first information.

The first information includes network deployment information of one or more network cells.

The network deployment information of the network cell may include a correspondence between an area covered by the network cell and an identifier of the network cell.

For example, the identifier of the network cell may include a cell identifier (cell ID) of the network cell.

S102: The terminal device determines one or more reported cells based on a movement route of the terminal device and the network deployment information of the one or more network cells.

The one or more reported cells include one or more of the one or more network cells.

S103: The terminal device sends second information to a first access network device.

The second information includes identifiers of the one or more reported cells.

Correspondingly, the first access network device receives the second information.

S104: The first access network device sends third information to the terminal device.

The third information is used to search for and select a target cell, the third information includes an identifier of the target cell, and the one or more reported cells include the target cell.

Correspondingly, the terminal device receives the third information.

S105: The terminal device accesses the target cell based on the third information.

According to the foregoing method, the terminal device can select the one or more reported cells based on the movement route of the terminal device and the network deployment information of the one or more network cells, and then initiate a network cell handover process to request to be handed over to one of the one or more reported cells. The reported cell is selected based on the movement route of the terminal device and the network deployment information of the network cell, so that the reported cell better matches the movement route of the terminal device, and network access accuracy is improved. In addition, when accessing the target cell, the terminal device needs to search for and measure only the target cell included in the reported cell, and may not search for or measure a cell other than the reported cell, so that unnecessary measurement and reselection can be reduced. Therefore, a signaling exchange between the terminal and a network side is reduced, and battery power consumption of the terminal is reduced.

For example, the first information may include the identifiers of the one or more network cells and a geographical location of a road covered by the network cell. In this application, the road, or referred to as a route, is a route on which the terminal device is allowed to move in this application. Further, the first information may further include one or more of the following: a cell group identifier (cell group ID), a correspondence between the cell group identifier and information about the route on which the terminal device is allowed to move, and a handover selection condition of each cell. The cell group identifier may be an identifier of a cell group set by a management device. A cell in each cell group covers one or more routes on which the terminal device is allowed to move. The one or more routes on which the terminal device is allowed to move are routes that correspond to the cell group identifier and on which the terminal device is allowed to move. In addition, the handover selection condition of each cell may be used to indicate a condition that needs to be satisfied for handover to the cell, for example, a frequency point condition, a handover priority condition or a handover threshold condition of the terminal device, or the like. For example, the handover selection condition of each cell may include frequency point information of the cell, priority information of the cell for allowing access of the terminal device, handover threshold information of the cell, or the like.

The first information in this application may be carried in network assistance information (network assistance information).

In addition, the area covered by the network cell may be indicated by cell coverage information of the network cell, and the network deployment information of each network cell may include a correspondence between the cell coverage information and the identifier of the network cell. In this application, the cell coverage information may be used to indicate a coverage range of the network cell. For example, the cell coverage information may include an area identifier, an area name, or a latitude and longitude.

Specifically, the area covered by the network cell in the first information may include the route on which the terminal device is allowed to move. In this case, deployment information of each network cell may include a correspondence between information about the route on which the terminal device is allowed to move and the identifier of the network cell. The information about the route on which the terminal device is allowed to move may include a geographical location corresponding to the route on which the terminal device is allowed to move. For example, the geographical location corresponding to the route on which the terminal device is allowed to move may include a name or an identifier corresponding to the route on which the terminal device is allowed to move, and/or a latitude and longitude corresponding to the route on which the terminal device is allowed to move. The terminal device may store a correspondence between a name (or an identifier) and a latitude and longitude or receive a correspondence between a name (or an identifier) and a latitude and longitude from an access network device or another device, to determine, based on the name (or the identifier) of the route in the first information, the latitude and longitude corresponding to the route.

The following specifically describes a manner in which the terminal device obtains the first information in S101.

For example, the first information may be sent by the first access network device (namely, an access network device connected to the terminal device), or may be sent by another access network device (namely, an access network device other than the access network device connected to the terminal device). This is not limited in this application.

In addition, the first information may alternatively be locally obtained by the terminal device. In this case, the first information may be locally stored in the terminal device.

Specifically, if the first information is sent by the first access network device, before S101, the first access network device may receive an initial access (initial access) request sent by the terminal device, and establish a connection to the terminal device based on the request.

For example, the initial access request may be used to indicate a status feature of the terminal device. Specifically, the initial access request may carry type information of the terminal device, for example, a type identifier of the terminal device, and the first access network device may determine, based on the status feature of the terminal device, whether to send the first information to the terminal device. For example, if the type information of the terminal device indicates that a type of the terminal device is a non-mobile device, the first access network device may determine, based on the type indication information, not to send the first information to the terminal device. Alternatively, if the type information of the terminal device indicates that a type of the terminal device is a device that moves relatively slowly or a device that moves for a relatively short distance, the first access network device may determine, based on the type indication information, not to send the first information to the terminal device. Alternatively, if the type information of the terminal device indicates that a type of the terminal device is a mobile device and/or the type information of the terminal device indicates that the type of the terminal device is a device that moves relatively quickly or a device that moves for a relatively long distance, the first access network device may determine, based on the type indication information, to send the first information to the terminal device.

In addition, the initial access request may indicate a speed of the terminal device (for example, an average movement speed or a maximum or minimum instantaneous speed of the terminal device). If the initial access request carries speed indication information, when the speed of the terminal device is greater than (or greater than or equal to) a first threshold speed, the first access network device may determine, based on the status feature of the terminal device, to send the first information to the terminal device; or when the speed of the terminal device is less than (or less than or equal to) a second threshold speed, the first access network device may determine, based on the status feature of the terminal device, not to send the first information to the terminal device, where the first threshold speed is equal to the second threshold speed, or the first threshold speed is greater than the second threshold speed.

When sending the first information, the first access network device may send a broadcast (broadcast) message, and include the first information in the broadcast message. Both the terminal device and another terminal device may receive the broadcast message, and may obtain the first information from the broadcast message. Alternatively, after establishing the connection to the terminal device based on the initial access request, the first access network device may send a message to the terminal device through the connection to the terminal device, and include the first information in the sent message. For example, the first access network device sends a radio resource control (radio resource control, RRC) connection reconfiguration complete (RRC connection reconfiguration complete) message to the terminal device, where the RRC connection reconfiguration message carries the first information. This application also imposes no limitation on including the first information in another RRC message or another non-RRC message, and sending the message to the terminal device, to implement indication of the first information. In addition, the first information may alternatively be sent by an access network device other than the first access network device (namely, an access network device not connected to the terminal device) in a broadcast manner.

In a possible implementation, the management device may determine the first information.

For example, the management device may receive, from a network exposure function network element, the information about the route on which the terminal device is allowed to move. The management device may determine the first information based on the information about the route on which the terminal device is allowed to move and cell coverage information configured in the management device. The cell coverage information configured in the management device may be obtained by receiving the cell coverage information of each network cell sent by each network cell.

The information about the route on which the terminal device is allowed to move includes the geographical location at which the terminal device is allowed to move. Specifically, the route on which the terminal device is allowed to move may include all routes on which the terminal device may move. The routes may include a tangible highway such as a highway or a railway on which the terminal device can move. The routes may further include a virtual air route. A route of the virtual air route is not limited to a direction of a tangible highway such as a highway or a railway. The virtual air route is, for example, an air route of an aircraft, a sea road of a ship, or a virtual route on which a device such as a vehicle can travel in a non-highway or non-railway scenario. The route may further include an area in which the terminal device may move, for example, a workshop, a factory building, an intersection, or a preset marked location.

For example, during determining of the first information, when the management device determines that a network cell covers at least one of the routes on which the terminal device is allowed to move, the management device may include the network deployment information of the network cell in the first information. In other words, each network cell in the first information covers at least one of the routes on which the terminal device is allowed to move. In this case, the terminal device selects a reported cell from the network cell that covers the at least one of the routes on which the terminal device is allowed to move, and the terminal device does not need to select the reported cell based on a cell that does not cover the route on which the terminal device is allowed to move. Therefore, workload of the terminal device for determining the reported cell is reduced, and network access efficiency is improved.

In another implementation, during determining of the first information, when the management device determines that one network cell covers at least one of the routes on which the terminal device is allowed to move, and a distance (for example, a minimum distance or a maximum distance) between the at least one route and a center point of the network cell does not exceed (or is less than) a first distance, the management device may include the network deployment information of the network cell in the first information. The first distance is less than a radius of the network cell, to improve communication quality.

It should be understood that the center point of the network cell may be a geometric center of a coverage range of the network cell, or may be a location of an access network device to which the network cell belongs. The radius of the network cell is a distance between the center point and a location that is farthest from the center point of the network cell within the coverage range of the network cell. The first distance may be a fixed value, for example, a fixed value that is set in advance. Alternatively, the first distance may be related to the radius of the network cell. For example, a length of the first distance is equal to k times the radius of the network cell, where 0<k<1.

For example, the management device may send the first information to an access network device (where it should be understood that there may be one or more access network devices herein, including but not limited to the first access network device shown in FIG. 5).

For example, a vertical industry control center may determine, based on a layout and a geographical location of a road, a marked area, a non-road, or a non-marked area in a current scenario, a route on which the terminal device is allowed to move, and send, to the management device, information about the route on which the terminal device is allowed to move, so that the management device may learn of the information about the route on which the terminal device is allowed to move. Optionally, the vertical industry control center sends, to an NEF, the information about the route on which the terminal device is allowed to move, and the NEF sends, to the management device, the information about the route on which the terminal device is allowed to move.

The vertical industry control center may also set, for the terminal device based on a behavior feature of the terminal device, a corresponding route on which the terminal device is allowed to move. For example, a terminal device mounted on a vehicle cannot reach an area that cannot be reached by the vehicle, so that a location that corresponds to the terminal device and that is in a route on which the terminal device is allowed to move may be limited to an area through which the vehicle can pass. It should be understood that, for terminal devices having a same type identifier, behavior of the terminal devices is similar, for example, the terminal devices may have a same movement route or have a similar mobility pattern (which is a mobility pattern such as not move, slowly move, or quickly move). Therefore, a same route on which the terminal devices are allowed to move may be configured for the terminal devices. In addition, for terminal devices having different type identifiers, different routes on which the terminal devices are allowed to move may be configured, to implement flexible management of the terminal devices.

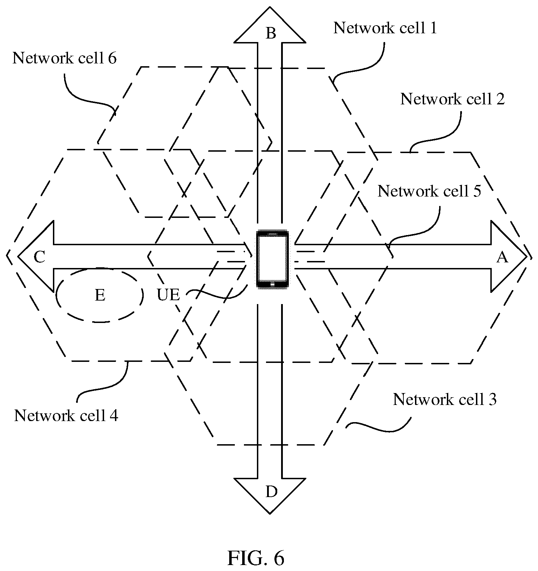

As shown in FIG. 6, if locations at which UE is allowed to move include a route A, a route B, a route C, a route D, and a marked area E (as shown in an elliptical area in FIG. 6), that is, routes on which the terminal device is allowed to move include the route A, the route B, the route C, the route D, and the area E, information about the route on which the terminal device is allowed to move may include geographical locations of the route A, the route B, the route C, the route D, and the area E.

For example, the cell coverage information configured in the management device may be geographical locations of a network cell 1, a network cell 2, a network cell 3, a network cell 4, a network cell 5, and a network cell 6 in FIG. 6 (where the network cell 1, the network cell 2, the network cell 3, the network cell 4, the network cell 5, and the network cell 6 are respectively represented by a dashed hexagon in FIG. 6).

The management device may determine network deployment information of a network cell whose coverage range overlaps the route on which the terminal device is allowed to move as the network deployment information of the one or more network cells included in the first information. For example, as shown in FIG. 6, the network cell 1 covers the route A, the route B, and the route C, the network cell 2 covers the route A, the network cell 3 covers the route A, the route C, and the route D, the network cell 4 covers the route C and the marked area E, the network cell 5 covers the route A, the route B, the route C, and the route D, and an edge of the network cell 6 covers the route B, so that network deployment information of the network cell 1, the network cell 2, the network cell 3, the network cell 4, the network cell 5, and the network cell 6 may be determined as the network deployment information of one or more network cells included in the first information.

For example, in the foregoing example, a distance between a route that is covered by a network cell and on which the terminal device is allowed to move and a center point of the network cell does not exceed (or is less than) the first distance. It is assumed that the first distance is equal to 0.8*a radius of a network cell. The edge of the network cell 6 covers the route B, and a distance between the route B and a center point of the network cell 6 is greater than the first distance. Therefore, the first information may be determined based on the network deployment information of the network cell 1, the network cell 2, the network cell 3, the network cell 4, and the network cell 5, and the first information is not determined based on the network deployment information of the network cell 6.

It should be understood that "cover" in this application refers to overlapping or partial overlapping between locations. For example, when a coverage range of a network cell overlaps or partially overlaps a location at which the terminal device is allowed to move, it may be referred to as that the network cell covers the location at which the terminal device is allowed to move.

It should be understood that the network deployment information of the network cell may include a correspondence between the cell coverage information of the network cell and an identifier of the network cell. For example, the network deployment information of the network cell 1 shown in FIG. 6 may include the cell coverage information of the network cell 1, and the correspondence between the cell coverage information of the network cell and the identifier of the network cell may be shown in Table 1.

**Table 1**

| Network cell identifier | Cell coverage information |
|---|---|
| Cell ID_Network cell 1 | Range 1 |
| Cell ID_Network cell 2 | Range 2 |
| Cell ID_Network cell 3 | Range 3 |

In addition, the network deployment information of the network cell may include a correspondence between the information about the route that is covered by the network cell and on which the terminal device is allowed to move and the identifier of the network cell. For example, the network deployment information of the network cell 5 shown in FIG. 6 may include a latitude and longitude of the route A (namely, a first location corresponding to the network cell 5). Alternatively, the geographical location corresponding to the network cell 5 may include a name or an identifier of the route A.

Further, if the network deployment information of the network cell includes the correspondence between the information about the route that is covered by the network cell and on which the terminal device is allowed to move and the identifier of the network cell, a distance between the route that is covered by the network cell and on which the terminal device is allowed to move and a center of the network cell does not exceed (or is less than) a second distance. For example, it is assumed that the second distance is equal to 0.8*a radius of a network cell. Based on FIG. 6, an edge of the network cell 1 further covers the route A and the route C, but distances between a center point of the network cell and the route A and the route C covered by the network cell 1 are less than the second distance. In this case, it may be considered that a route that is covered by the network cell 1 and on which the terminal device is allowed to move does not include the geographical locations of the route A and the route C. Therefore, the route that is covered by the network cell 1 and on which the terminal device is allowed to move may include the route B. In this application, for a same network cell, the first distance may be equal to or not equal to the second distance.

For example, FIG. 6 is still used as an example. If a distance between the route that is covered by each network cell and on which the terminal device is allowed to move and a center point of the network cell does not exceed (or is less than) the second distance, where the second distance is equal to 0.8*the radius of the network cell, a correspondence between a first location covered by the network cell and the identifier of the network cell may be shown in Table 2.

**Table 2**

| First location | Network cell identifier |
|---|---|
| Route A | Cell ID_Network cell 5 |
| | Cell ID_Network cell 2 |
| Route B | Cell ID_Network cell 5 |
| | Cell ID_Network cell 1 |
| Route C | Cell ID_Network cell 5 |
| | Cell ID_Network cell 4 |
| Route D | Cell ID_Network cell 5 |
| | Cell ID_Network cell 3 |
| Marked area E | Cell ID_Network cell 4 |

In addition, identifiers of a plurality of network cells corresponding to the route A in Table 2 may also be used to indicate an orientation relationship among the plurality of network cells. For example, if the identifier of the network cell 5 carried in the first information is located before the identifier of the network cell 2, it may indicate that the network cell 5 is located in a north direction (or a northward direction) of the network cell 2, the network cell 2 is located in a south direction (or a southward direction) of the network cell 5, the network cell 5 is located in an east direction (or an eastward direction) of the network cell 2, the network cell 2 is located in a west direction (or a westward direction) of the network cell 5, the network cell 5 is located in a south direction (or a southward direction) of the network cell 2, the network cell 2 is located in a north direction (or a northward direction) of the network cell 5, the network cell 5 is located in a west direction (or a westward direction) of the network cell 2, or the network cell 2 is located in an east direction (or an eastward direction) of the network cell 5. Based on this, the terminal device may further determine, based on a movement route of the terminal device and Table 2, cells that are successively passed through on the movement route, so that the terminal device selects the cell that is passed through first as a reported cell, and/or when performing cell handover from the cell that is passed through first, the terminal device reports, to the access network device, the cell that is passed through later.

In addition, the first information may carry a cell list (cell list). Each cell list is used to indicate one or more network cells on one route on which the terminal device is allowed to move, and each network cell covers a corresponding route on which the terminal device is allowed to move. For example, a correspondence between each route on which the terminal device is allowed to move and identifiers of the one or more network cells may be used as a cell list. The first access network device may send one or more cell lists to the terminal device, to indicate correspondences between one or more routes on which the terminal device allowed to move and the identifiers of one or more network cells. FIG. 6 is used as an example, a cell list corresponding to the route A may be represented as follows:

**Table 3**

| First location | Network cell identifier |
|---|---|
| Route A | Cell ID_Network cell 5 |
| | Cell ID_Network cell 2 |

During implementation of S102, the terminal device may determine one or more candidate cells from the one or more network cells based on a location of the movement route of the terminal device and the network deployment information of the one or more network cells. An area covered by the candidate network cell overlaps the movement route of the terminal device. Specifically, the movement route of the mobile terminal is an actual movement route of the terminal device, and the terminal device may obtain the movement route from the vertical industry control center or obtain the movement route according to an instruction of a driver (for example, a control instruction sent by the driver) of a movable apparatus in which the terminal device is located, and move based on the movement route. FIG. 6 is still used as an example. When UE currently travels along the route C from west to east, if a movement route of the UE is turning left at a front intersection, and then traveling along the route B from south to north, a location of the movement route of the UE is the location of the route B, so that the UE may determine that the network cell 5 and the network cell 1 that cover the route B are candidate cells.

For example, Table 1 is used as an example. If the network deployment information of the network cell includes correspondences between the cell coverage information of the one or more network cells and the identifiers of the one or more network cells, if the terminal device determines that the movement route of the terminal device passes through the range 1 shown in Table 1, the terminal device may use, based on Table 1, the network cell 1 identified by the "Cell ID_Network cell 1" as a candidate cell.

For another example, Table 2 is used as an example. If the network deployment information of the network cell includes the correspondence between the name, the identifier, and/or the latitude and longitude corresponding to the route on which the terminal device is allowed to move and the identifier of the network cell, when the terminal device determines that a to-be-traveled movement route is the route A in S102, network cells corresponding to the route A are the network cell 5 and the network cell 2 based on Table 2, and the terminal device may select a candidate cell from the network cell 5 and the network cell 2. For example, the terminal device uses the network cell 5 and the network cell 2 as candidate cells, or either of the network cell 5 and the network cell 2 as a candidate cell.

For another example, Table 3 is used as an example. If the network deployment information of the one or more network cells includes the cell list, when a movement route of UE is the route A, the UE may determine a candidate cell based on Table 3, that is, the UE selects the candidate cell from the network cell 5 and the network cell 2.

For example, the terminal device may determine another network cell as the reported cell based on the selected one or more candidate cells, to improve a network handover success rate, where areas covered by the one or more candidate network cells overlap the movement route of the terminal device. For example, after selecting the candidate cell, the terminal device may select, based on a signal strength of the network cell 1, another cell different from the one or more candidate cells in the one or more reported cells, where a difference between a signal strength of the another cell and a signal strength of the candidate cell falls within a specific range, and the another cell overlaps the movement route of the terminal device. The specific range may be a preset signal strength value, and a value of the specific range may alternatively be defined in a protocol or indicated by the access network device to the terminal device.

FIG. 6 is still used as an example, if the movement route of the terminal device is the route B, and the candidate cell selected by the terminal device is the network cell 1, the terminal device may measure the network cell 1 and other network cells, to learn of signal strengths of the network cell 1 and the plurality of other network cells, and selects, based on the signal strength of the network cell 1, a cell whose signal strength is close to the signal strength of the network cell 1 and whose coverage range overlaps the route B from the other network cells as a reported cell. For example, a difference between a signal strength of the network cell 6 and the signal strength of the network cell 1 falls within the specific range, and the network cell 6 covers the route B, so that the terminal device may determine the network cell 6 as the reported cell. Therefore, the terminal device may send the identifier of the network cell 1 and the identifier of the network cell 6 to the first access network device.

During implementation of S 103, the terminal device may include the second information in a conditional handover request (conditional handover request) message, and send the conditional handover request message to the first access network device, to request to perform network handover. The second information may include the identifiers of the one or more reported cells.

There may be a plurality of reported cells. After receiving the conditional handover request message sent by the UE, the first access network device may select a target cell based on network performance of the plurality of reported cells or a local configuration. For example, the first access network device may separately measure the plurality of reported cells, and select the target cell based on signal strengths of the plurality of network cells. The target cell may be a reported cell having a greatest signal strength. The first access network device may determine, based on the identifier of the target cell, an access network device to which the target cell belongs. Alternatively, the first access network device may select one target cell from a plurality of reported cells according to a locally configured target cell selection rule.

If the target cell belongs to the first access network device, the first access network device may send the third information to the terminal device, where the third information includes the identifier of the target cell. The first access network device may receive a first request from the terminal device, where the first request includes the identifier of the target cell, and the first access network device enables, based on the first request, the terminal device to access the target cell.

For example, if the target cell belongs to the first access network device, the first access network device may perform handover preparation (handover preparation) based on a context of the terminal device. The handover preparation may include determining of handover configuration information (handover configuration information). The handover configuration information may include the identifier of the target cell. The handover configuration information may further include a part or all of information such as a frequency point of the target cell; a handover threshold of the target network cell; a handover priority of the target cell; or a random access preamble sequence (preamble) of the target cell. The third information may include the handover configuration information.

Optionally, after determining that the terminal device is allowed to access the target cell, the first access network device may establish the connection to the terminal device. After establishing the connection to the terminal device, the first access network device may send a first response message corresponding to the first request message to the terminal device, to indicate the terminal device that the handover is complete. For example, the first response message may be an RRC connection response (RRC connection response) message.

For example, the third information may be carried in a conditional handover response (conditional handover response) message. The first request may be an RRC connection request (RRC connection request) message.

If the target cell belongs to a second access network other than a first access network, the first access network device may send fourth information to the second access network, where the fourth information includes the context of the terminal device and the identifier of the target cell, the context of the terminal device is used by a second access network device to determine the third information, and the third information is used by the terminal device to search for and select the target cell.

The second access network device may send the third information to the first access network device based on the fourth information, where the third information includes the identifier of the target cell, and then the first access network device sends the third information to the terminal device. The terminal device searches for and selects the target cell based on the third information, and sends a second request to the second access network device, where the second request includes the identifier of the target cell, and the second access network device may enable, based on the second request, the terminal device to access the target cell.

Optionally, after determining that the terminal device is allowed to access the target cell, the second access network device may establish a connection to the terminal device. After establishing the connection to the terminal device, the second access network device may send a second response message corresponding to the second request message to the terminal device, to indicate the terminal device that the handover is complete. For example, the second response message may be an RRC connection response message.

For example, the second access network device may receive the fourth information from the first access network device, and perform handover preparation based on the context of the terminal device included in the fourth information. The handover preparation may include determining of handover configuration information. The handover configuration information may include the identifier of the target cell. The handover configuration information may further include a part or all of information such as a frequency point of the target cell; a handover threshold of the target network cell; a handover priority of the target cell; or a preamble of the target cell. The third information may include the handover configuration information.

For example, the fourth information may be carried in the conditional handover request message. In addition, the third information may be carried in a conditional handover response message. The second request may be an RRC connection request message.

As shown in FIG. 7, a network access method of a terminal device according to an embodiment of the invention includes the following steps.

S201: A terminal device obtains first information.

The first information includes network deployment information of one or more network cells. The network deployment information of the network cell may include a correspondence between an area covered by the network cell and an identifier of the network cell.

S202: The terminal device determines one or more reported cells based on a movement route of the terminal device and the network deployment information of the one or more network cells.

The one or more reported cells include one or more of the one or more network cells.

The terminal device may determine, based on the movement route of the terminal device and the network deployment information of the one or more network cells, one or more candidate cells whose coverage areas overlap the movement route of the terminal device, where the one or more network cells include the one or more candidate cells. The terminal device may determine the one or more reported cells based on the one or more candidate cells, where the one or more reported cells include the one or more candidate cells.

In the one or more reported cells, a reported cell other than the one or more candidate cells may be determined by the terminal device based on a signal strength.

S203: The terminal device sends second information to a first access network device.

The second information includes identifiers of the one or more reported cells.

Correspondingly, the first access network device receives the second information.

S204: The first access network device determines a target cell based on the identifiers of the one or more reported cells.

S205: The first access network device determines, based on the target cell, an access network device to which the target cell belongs.

If the target cell belongs to the first access network device, S206 to S209 are performed. If the target cell belongs to a second access network device other than the first access network device, S210 to S215 are performed.

S206: The first access network device determines third information based on a context of the terminal device.

The third information is used by the terminal device to search for and select the target cell. The third information includes an identifier of the target cell. The third information may further include a part or all of information such as a frequency point of the target cell; a handover threshold of the target cell; a handover priority of the target cell; or a preamble of the target cell.

S207: The first access network device sends the third information to the terminal device.

Correspondingly, the terminal device receives the third information.

S208: The terminal device searches for and selects the target cell based on the third information.

S209: The terminal device accesses the target cell.

Specifically, the terminal device sends a first request to the first access network device, where the first request includes the identifier of the target cell. The first request may be an RRC connection establishment request message. Correspondingly, the first access network device receives the first request. The first access network device determines, based on the first request, that the terminal device is allowed to access the target cell, and then enables, based on the first request, the terminal device to access the target cell. After the terminal device accesses the target cell, the first access network device may send a first response message to the terminal device, to indicate that the terminal device is connected to the target cell. The first response message may be an RRC connection establishment response message.

S210: The second access network device sends fourth information to the second access network device.

The fourth information includes a context of the terminal device and an identifier of the target cell.

S211: The second access network device determines third information based on the context of the terminal device.

The third information is used by the terminal device to search for and select the target cell. The third information includes the identifier of the target cell. The third information may further include a part or all of information such as a frequency point of the target cell; a handover threshold of the target cell; a handover priority of the target cell; or a preamble of the target cell.

S212: The second access network device sends the third information to the first access network device.

Correspondingly, the first access network device receives the third information.

S213: The first access network device sends the third information to the terminal device.

Correspondingly, the terminal device receives the third information.

S214: The terminal device searches for and selects the target cell based on the third information.

S215: The terminal device accesses the target cell.

Specifically, the terminal device sends a second request to the second access network device, where the second request includes the identifier of the target cell. The second request may be an RRC connection establishment request message. Correspondingly, the second access network device receives the second request. The second access network device determines, based on the second request, that the terminal device is allowed to access the target cell, and then enables, based on the second request, the terminal device to access the target cell. After the terminal device accesses the target cell, the second access network device may send a second response message to the terminal device, to indicate that the terminal device is connected to the target cell. The second response message may be an RRC connection establishment response message.

According to the foregoing method, the terminal device may select the reported cell, and initiate network handover, so that handover flexibility of a network handover mechanism is improved.

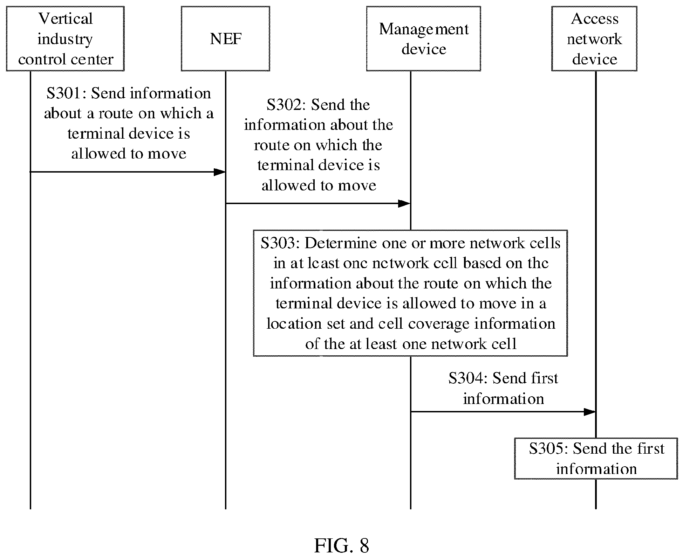

As shown in FIG. 8, a network access method of a terminal device according to an embodiment of this application may include the following steps.

S301: A vertical industry control center sends, to an NEF, information about a route on which a terminal device is allowed to move.

The information about the route on which the terminal device is allowed to move is used to indicate a location of the route on which the terminal device is allowed to move. For example, the information about the route on which the terminal device is allowed to move may include a geographical location corresponding to the route on which the terminal device is allowed to move in a current scenario or area.

In an example, the vertical industry control center may send, to the NEF by using a service-based parameter provision update (Nnef_parameter provision update) message, the information about the route on which the terminal device is allowed to move.

Correspondingly, the NEF receives the information about the route on which the terminal device is allowed to move.

S302: The NEF sends, to a management device, the information about the route on which the terminal device is allowed to move.

In an example, the NEF sends, to the management device by using a road configuration information update (road configuration information update) message, the information about the route on which the terminal device is allowed to move.

Correspondingly, the management device receives the information about the route on which the terminal device is allowed to move.

S303: The management device selects one or more network cells based on the information about the route on which the terminal device is allowed to move and cell coverage information configured in the management device.

For example, a coverage range of each selected network cell overlaps the route on which the terminal device is allowed to move.

Further, a distance between the route that is within the coverage range of each selected network cell and on which the terminal device is allowed to move and a center point of the network cell does not exceed a first distance, and the first distance is less than a radius of the network cell.

The cell coverage information configured in the management device may be preset in the management device, or may be obtained by the management device from a network cell managed by the management device.

Specifically, the management device may be a RAN OAM. A geographical location (for example, information about an identifier, a name, and/or a latitude and longitude of the geographical location) of a cell in an area managed by the RAN OAM may be configured in the RAN OAM. Then, the RAN OAM may mark, in the current scenario or area based on the obtained information about the route on which the terminal device is allowed to move, one or more network cells that overlap the route on which the terminal device is allowed to move. The cells are the one or more network cells selected in S303.

S304: The management device sends first information to an access network device, where the first information includes network deployment information of the foregoing selected one or more network cells.

For example, the first information may be generated based on cell identifiers of the one or more network cells selected in S303 and the geographical location of the route that is covered by the network cell and on which the terminal device is allowed to move. Therefore, the first information may include the identifiers of the one or more network cells and the geographical location of the route that is covered by the one or more network cells and on which the terminal device is allowed to move.

For example, the first information may be carried in network assistance information.

The network deployment information of the network cell may include a correspondence between an area covered by the network cell and the identifier of the network cell.

The area covered by the foregoing network cell may include cell coverage information of the network cell and/or information about the route on which the terminal device is allowed to move in the area covered by the network cell. A distance between the route on which the terminal device is allowed to move and the center point of the network cell does not exceed a second distance, and the second distance is less than the radius of the network cell. The first distance may or may not be equal to the second distance.

It should be understood that the access network device shown herein includes the first access network device in this application, or may include another access network device, for example, a second access network device.

In an example, the management device sends the first information to the access network device by using an assistance information delivery (assistance information delivery) message.

Correspondingly, the access network device receives the first information.

S305: The access network device sends the first information.

Optionally, the access network device may send a broadcast message, where the broadcast message may carry the first information. Alternatively, the access network device may send an RRC connection reconfiguration message to a terminal device managed by the access network device, where the message carries the first information.

Correspondingly, the terminal device receives the first information.

If the access network device sends the first information in a broadcast manner, the terminal device may receive the broadcast message, and obtain the first information from the broadcast message. If the access network device sends the RRC connection reconfiguration message to the terminal device managed by the access network device, where the message carries the first information, the terminal device receives the RRC connection reconfiguration message, and obtains the first information from the RRC connection reconfiguration message.

According to the foregoing method, the management device may send the first information to the access network device, and then the access network device sends the first information, so that the terminal device receives the first information.

Based on a same inventive concept as the foregoing method embodiments, an embodiment of this application further provides a communication apparatus. The communication apparatus may have a function of any one of the terminal device, the first access network device, the second access network device, or the management device in the foregoing method embodiments, and may be configured to perform the steps performed by any one of the terminal device, the first access network device, the second access network device, or the management device provided in the foregoing method embodiments. The function may be implemented by hardware, or may be implemented by software or hardware executing corresponding software. The hardware or the software includes one or more modules corresponding to the foregoing function.

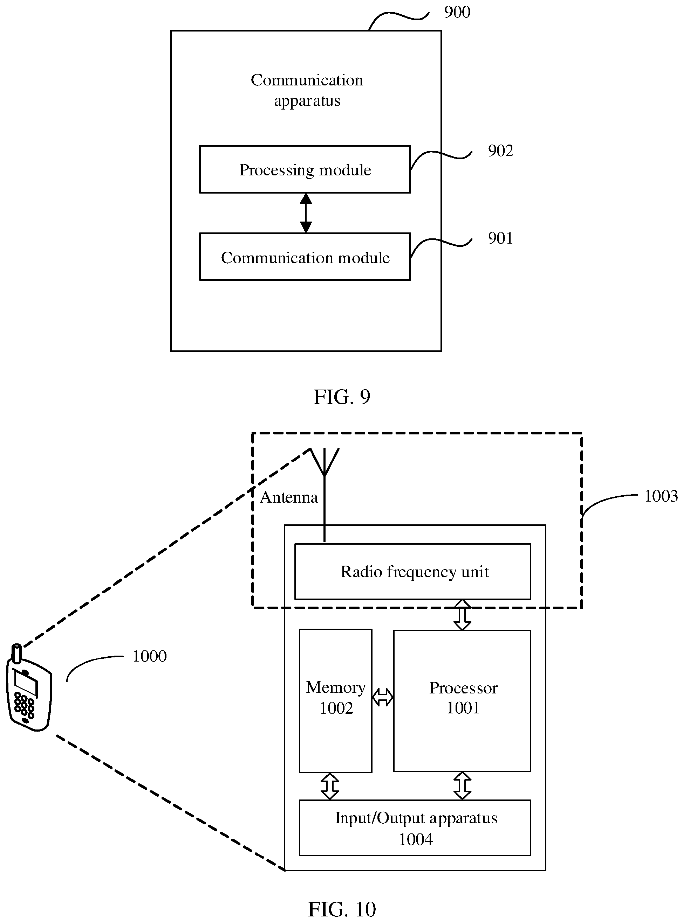

In a possible implementation, a communication apparatus 900 shown in FIG. 9 may be used as the terminal device in the foregoing method embodiment, and performs the steps performed by the terminal device in the foregoing method embodiment. As shown in FIG. 9, the communication apparatus 900 may include a communication module 901 and a processing module 902. The communication module 901 and the processing module 902 are coupled to each other. The communication module 901 may be configured to support the communication apparatus 900 in performing communication, and the communication module 901 may have a wireless communication function. The processing module 902 may be configured to support the communication apparatus 900 in performing the processing action in the foregoing method embodiment, including but not limited to: generating information and a message that are sent by the communication module 901, and/or demodulating and decoding a signal received by the communication module 901.

During execution of the foregoing method embodiment, the processing module 902 may be configured to obtain first information, where the first information includes network deployment information of one or more network cells, and the network deployment information of each network cell includes a correspondence between an area covered by the network cell and an identifier of the network cell. The processing module 902 may be further configured to determine one or more reported cells based on a movement route of the terminal device and the network deployment information of the one or more network cells, where the one or more reported cells include one or more of the one or more network cells. The communication module 901 may be configured to send second information to a first access network device, where the second information includes identifiers of the one or more reported cells. The communication module 901 may be further configured to receive third information from the first access network device, where the third information is used to search for and select a target cell, the third information includes an identifier of the target cell, and the one or more reported cells include the target cell. The processing module 902 may be further configured to access the target cell based on the third information.

The area covered by the network cell may include a route on which the terminal device is allowed to move, and deployment information of each network cell includes a correspondence between information about the route on which the terminal device is allowed to move and the identifier of the network cell.

The information about the route on which the terminal device is allowed to move may include a geographical location corresponding to the route on which the terminal device is allowed to move.

The geographical location corresponding to the route on which the terminal device is allowed to move may include a name, an identifier, and/or a latitude and longitude corresponding to the route on which the terminal device is allowed to move.

For example, when determining the one or more reported cells based on the movement route of the terminal device and the network deployment information of the one or more network cells, the processing module 902 may be specifically configured to: determine, based on the network deployment information of the one or more network cells, one or more candidate cells whose coverage areas overlap the movement route of the terminal device, where the one or more network cells include the one or more candidate cells; and determine the one or more reported cells based on the one or more candidate cells, where the one or more reported cells include the one or more candidate cells.

For example, when determining the one or more reported cells based on the one or more candidate cells, the processing module 902 may be specifically configured to determine, based on signal strengths of the one or more candidate cells, another cell different from the one or more candidate cells in the one or more reported cells, where a difference between a signal strength of the another cell and the signal strength of each of the one or more candidate cells falls within a specific range, and an area covered by the another cell overlaps the movement route of the terminal device.

The third information may further include a part or all of the following information: a frequency point of the target cell; a handover threshold of the target cell; a handover priority of the target cell; or a preamble of the target cell.

For example, when obtaining the first information, the processing module 902 may be specifically configured to obtain the first information based on a message from the first access network device, where the message from the first access network device is received by the communication module 901; obtain the first information based on a broadcast message, where the broadcast message is received by the communication module 901; or locally obtain the first information.

In another implementation, the communication apparatus provided in this embodiment of this application may alternatively include a hardware component, such as a processor, a memory, or a transceiver.

When the communication apparatus is a terminal device, a structure of the communication apparatus may be further shown in FIG. 10. For ease of understanding and illustration, an example in which the terminal device is a mobile phone is used in FIG. 10 to describe the structure of the communication apparatus. As shown in FIG. 10, a communication apparatus 1000 may include a processor 1001, a memory 1002, and a transceiver 1003.

The processor 1001 may be configured to: process a communication protocol and communication data, control the terminal device, execute a software program, process data of the software program, and the like. The memory 1002 may be configured to store the program and the data, and the processor 1001 may perform, based on the program, the method performed by the terminal device 101 in the embodiments of this application.

The transceiver 1003 may include a radio frequency unit and an antenna. The radio frequency unit may be configured to: perform conversion between a baseband signal and a radio frequency signal, and process the radio frequency signal. The antenna may be configured to send and receive a radio frequency signal in a form of an electromagnetic wave. In addition, only the radio frequency unit may be considered as the transceiver 1003. In this case, the communication apparatus 1000 may include the processor 1001, the memory 1002, the transceiver 1003, and the antenna.

In addition, the communication apparatus 1000 may further include an input/output apparatus 1004, for example, a component such as a touchscreen, a display screen, or a keyboard that may be configured to receive data entered by a user and output data to the user. It should be noted that some types of communication apparatuses may not have the input/output apparatus.

It should be understood that the communication module 901 may have a structure shown in the transceiver 1003, that is, the communication module 901 includes the radio frequency unit and the antenna. Alternatively, the communication module 901 may include the foregoing radio frequency unit. The processing module 902 may include the processor 1001, or include the processor 1001 and the memory 1002.

During execution of the method shown in the embodiments of this application, the transceiver 1003 may be configured to perform the steps performed by the communication module 901. In addition, the processor 1001 invokes the program stored in the memory 1002, to perform the steps performed by the processing module 902.

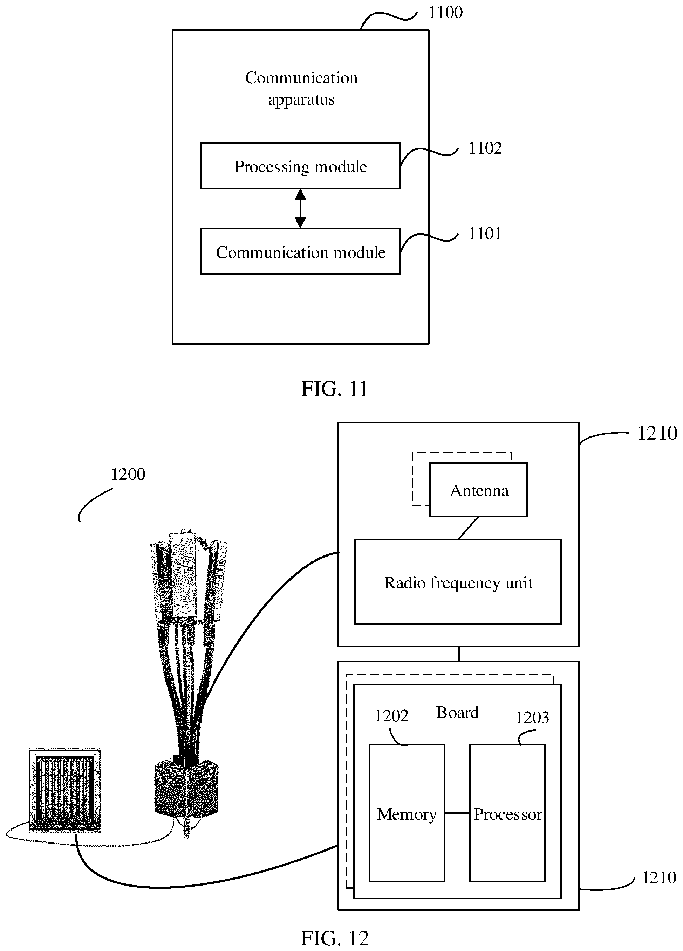

In a possible implementation, a communication apparatus 1100 shown in FIG. 11 may be used as the first access network device in the foregoing method embodiment, and performs the steps performed by the first access network device in the foregoing method embodiment. As shown in FIG. 11, the communication apparatus 1100 may include a communication module 1101 and a processing module 1102. The communication module 1101 and the processing module 1102 are coupled to each other. The communication module 1101 may be configured to support the communication apparatus 1100 in performing communication, and the communication module 1101 may have wireless communication and wired communication functions. For example, the communication apparatus 1100 may communicate with a terminal device by using the wireless communication function of the communication module 1101. The communication apparatus 1100 may communicate with another access network device, a management device, or a core network device by using the wired communication function of the communication module 1101. The processing module 1102 may be configured to support the communication apparatus 1100 in performing the processing action in the foregoing method embodiment, including but not limited to: generating information and a message that are sent by the communication module 1101, and/or demodulating and decoding a signal received by the communication module 1101.

During execution of the foregoing method embodiment, the communication module 1101 may be configured to receive second information from the terminal device, where the second information includes identifiers of one or more reported cells; the processing module 1102 may be configured to select a target cell from the one or more reported cells based on network performance of the one or more reported cells or based on a local configuration; and the communication module 1101 may be further configured to send third information to the terminal device, where the third information includes an identifier of the target cell, and the third information is used to search for and select the target cell.

For example, the communication module 1101 may be further configured to: receive first information from a management device, where the first information includes network deployment information of one or more network cells, and the network deployment information of each network cell includes a correspondence between an area covered by the network cell and an identifier of the network cell; and send the first information.

The area covered by the network cell may include a route on which the terminal device is allowed to move, and deployment information of each network cell includes a correspondence between information about the route on which the terminal device is allowed to move and the identifier of the network cell.

The information about the route on which the terminal device is allowed to move may include a geographical location corresponding to the route on which the terminal device is allowed to move.

The geographical location corresponding to the route on which the terminal device is allowed to move may include a name, an identifier, and/or a latitude and longitude corresponding to the route on which the terminal device is allowed to move.

For example, when sending the first information, the communication module 1101 may be specifically configured to: send a broadcast message, where the broadcast message includes the first information; or send the first information to the terminal device.

For example, if the communication module 1101 sends the first information to the terminal device, the processing module 1102 may be further configured to determine, based on a status feature of the terminal device, to send the first information to the terminal device. The status feature includes a terminal type of the terminal device and/or a speed of the terminal device.

In a possible example, the processing module 1102 may be further configured to select a target cell from the one or more reported cells based on network performance of the one or more reported cells or based on a local configuration. For example, the processing module 1102 may separately measure the plurality of reported cells by using the communication module 1101, and select the target cell based on signal strengths of the plurality of network cells. The target cell may be a reported cell having a greatest signal strength.

In a possible example, the processing module 1102 may be further configured to determine, based on the identifier of the target cell, an access network device to which the target cell belongs.

For example, when the target cell belongs to the first access network device, the communication module 1101 may be further configured to receive a first request from the terminal device, where the first request includes the identifier of the target cell; and the processing module 1102 may be further configured to enable, based on the first request, the terminal device to access the target cell.

For example, when the target cell belongs to a second access network device, the communication module 1101 may be further configured to: send fourth information to the second access network device, where the fourth information includes a context of the terminal device and the identifier of the target cell, the context of the terminal device is used by the second access network device to determine the third information, and the third information is used by the terminal device to search for and select the target cell; and receive the third information from the second access network device.

The third information may further include a part or all of the following information: a frequency point of the target cell; a handover threshold of the target cell; a handover priority of the target cell; or a preamble of the target cell.

In another implementation, the communication apparatus provided in this embodiment of this application may alternatively include a hardware component, such as a processor, a memory, or a transceiver.

For example, if the communication apparatus is a first access network device, a structure of the communication apparatus may be shown in FIG. 12. For ease of understanding, a base station is used as an example in FIG. 12 to describe the structure of the communication apparatus. A communication apparatus 1200 may include a transceiver 1201, a memory 1202, and a processor 1203. The transceiver 1201 may be used by the communication apparatus to perform communication, for example, configured to send or receive the foregoing reference signal. The memory 1202 is coupled to the processor 1203, and is configured to store a program and data that are necessary for the communication apparatus 1200 to implement functions. The processor 1203 is configured to support the communication apparatus 1200 in performing a corresponding processing function in the foregoing method, for example, generating information or determining a target cell in the method embodiments of this application. The function may be implemented by invoking the program stored in the memory 1202.

Specifically, the transceiver 1201 may be a wireless transceiver, and may be configured to support the communication apparatus 1200 in sending and receiving signaling and data through a wireless air interface. The transceiver 1201 may also be referred to as a transceiver unit or a communication unit. The transceiver 1201 may include a radio frequency unit and one or more antennas. The radio frequency unit, such as a remote radio unit (remote radio unit, RRU), may be specifically configured to: transmit a radio frequency signal and perform conversion between a radio frequency signal and a baseband signal. The one or more antennas may be specifically configured to radiate and receive the radio frequency signal. Optionally, the transceiver 1201 may further include only the foregoing radio frequency unit. In this case, the communication apparatus 1200 may include the transceiver 1201, the memory 1202, the processor 1203, and the antenna.

The memory 1202 and the processor 1203 may be integrated together or may be independent of each other. As shown in FIG. 12, the memory 1202 and the processor 1203 may be integrated into a control unit 1210 of the communication apparatus 1200. For example, the control unit 1210 may include a baseband unit (baseband unit, BBU) of an LTE base station, and the baseband unit may also be referred to as a digital unit (digital unit, DU); or the control unit 1210 may include a distributed unit (distributed unit, DU) and/or a centralized unit (centralized unit, CU) in a base station in 5G and a future radio access technology. The control unit 1210 may include one or more boards. A plurality of boards may jointly support a radio access network (such as an LTE network) of a single access standard, or may separately support radio access networks (such as an LTE network, a 5G network, and another network) of different access standards. The memory 1202 and the processor 1203 may serve one or more boards. In other words, the memory 1202 and the processor 1203 may be separately disposed on each board. Alternatively, a plurality of boards may share the same memory 1202 and the same processor 1203. In addition, a necessary circuit may be further disposed on each board. For example, the circuit may be configured to implement coupling between the memory 1202 and the processor 1203. The transceiver 1201, the processor 1203, and the memory 1202 may be connected to each other by using a bus (bus) structure or another connection medium.

In addition, the communication apparatus 1200 may further include a communication interface (not shown in FIG. 12). The communication interface may be configured to support the communication apparatus 1200 in performing wired communication with another access network device, a core network element, or a management device.

It should be understood that the communication module 1101 may have a structure shown in the transceiver 1201, that is, the communication module 1101 includes the radio frequency unit and the antenna. Alternatively, the communication module 1101 may include the foregoing radio frequency unit. The processing module 1102 may include the processor 1203, or include the processor 1203 and the memory 1202.

When the foregoing first access network device is implemented by using the structure shown in FIG. 12, the processor 1203 may perform the steps performed by the foregoing processing module 1102, and the transceiver 1201 performs the wireless communication step performed by the foregoing communication module 1101, for example, performing the communication step between the first access network device and the terminal device. The communication interface performs the wired communication step performed by the communication module 1101, for example, performing communication between the first access network device and the management device; and/or performing communication between the first access network device and the second access network device. The memory 1202 may be configured to store a program, and the processor 1203 executes the program to perform the steps performed by the processing module 1102.

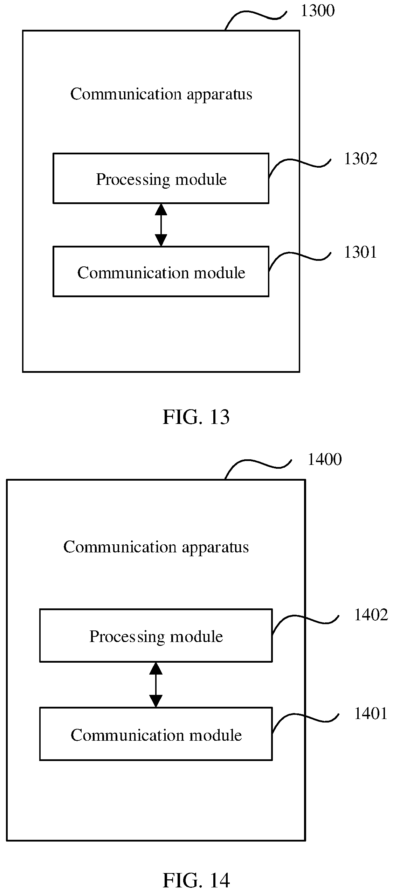

In a possible implementation, a communication apparatus 1300 shown in FIG. 13 may be used as the second access network device in the foregoing method embodiment, and performs the steps performed by the second access network device in the foregoing method embodiment. As shown in FIG. 13, the communication apparatus 1300 may include a communication module 1301 and a processing module 1302. The communication module 1301 and the processing module 1302 are coupled to each other. The communication module 1301 may be configured to support the communication apparatus 1300 in performing communication, and the communication module 1301 may have wireless communication and wired communication functions. For example, the communication apparatus 1300 may communicate with a terminal device by using the wireless communication function of the communication module 1301. The communication apparatus 1300 may communicate with another access network device, a management device, or a core network device by using the wired communication function of the communication module 1301. The processing module 1302 may be configured to support the communication apparatus 1300 in performing the processing action in the foregoing method embodiment, including but not limited to: generating information and a message that are sent by the communication module 1301, and/or demodulating and decoding a signal received by the communication module 1301.

During execution of the foregoing method embodiment, the communication module 1301 may be configured to receive fourth information from a first access network device, where the fourth information includes a context of the terminal device and an identifier of a target cell, the context of the terminal device is used by the second access network device to determine third information, and the third information is used by the terminal device to search for and select the target cell. The communication module 1301 may be further configured to send the third information to the first access network device, where the third information includes the identifier of the target cell, and the target cell belongs to the second access network device. The communication module 1301 may be further configured to receive a second request of the terminal device, where the second request includes the identifier of the target cell. The processing module 1302 may be configured to enable, based on the second request, the terminal device to access the target cell.

The third information may further include a part or all of the following information: a frequency point of the target cell; a handover threshold of the target cell; a handover priority of the target cell; or a preamble of the target cell.

In another implementation, the communication apparatus provided in this embodiment of this application may alternatively include a hardware component, such as a processor, a memory, or a transceiver.

For example, if the communication apparatus is a second access network device, a structure of the communication apparatus may be shown in FIG. 12.

It should be understood that the communication module 1301 may have a structure shown in the transceiver 1201, that is, the communication module 1301 includes the radio frequency unit and the antenna. Alternatively, the communication module 1301 may include the foregoing radio frequency unit. The processing module 1302 may include the processor 1203, or include the processor 1203 and the memory 1202.

When the foregoing second access network device is implemented by using the structure shown in FIG. 12, the processor 1203 may perform the steps performed by the foregoing processing module 1302, and the transceiver 1201 performs the wireless communication step performed by the foregoing communication module 1301, for example, performing the communication step between the second access network device and the terminal device. The communication interface (not shown in FIG. 12) performs the wired communication step performed by the communication module 1301, for example, performing communication between the second access network device and the management device; and/or performing communication between the second access network device and the first access network device. The memory 1202 may be configured to store a program, and the processor 1203 executes the program to perform the steps performed by the processing module 1302.

In a possible implementation, a communication apparatus 1400 shown in FIG. 14 may be used as the management device in the foregoing method embodiment, and performs the steps performed by the management device in the foregoing method embodiment. As shown in FIG. 14, the communication apparatus 1400 may include a communication module 1401 and a processing module 1402. The communication module 1401 and the processing module 1402 are coupled to each other. The communication module 1401 may be configured to support the communication apparatus 1400 in performing communication, and the communication module 1401 may have wireless communication and wired communication functions. For example, the communication apparatus 1400 may communicate with a terminal device by using the wireless communication function of the communication module 1401. The communication apparatus 1400 may communicate with another access network device, a management device, or a core network device such as an NEF by using the wired communication function of the communication module 1401. The processing module 1402 may be configured to support the communication apparatus 1400 in performing the processing action in the foregoing method embodiment, including but not limited to: generating information and a message that are sent by the communication module 1401, and/or demodulating and decoding a signal received by the communication module 1401.

During execution of the foregoing method embodiment, the processing module 1402 may be configured to determine first information, where the first information includes network deployment information of one or more network cells, and the network deployment information of each network cell includes a correspondence between an area covered by the network cell and an identifier of the network cell. The communication module 1401 may be configured to send the first information to an access network device.

The area covered by the network cell may include a route on which the terminal device is allowed to move, and deployment information of each network cell includes a correspondence between information about the route on which the terminal device is allowed to move and the identifier of the network cell.

The information about the route on which the terminal device is allowed to move may include a geographical location corresponding to the route on which the terminal device is allowed to move.

The geographical location corresponding to the route on which the terminal device is allowed to move may include a name, an identifier, and/or a latitude and longitude corresponding to the route on which the terminal device is allowed to move.

For example, the communication module 1401 may be further configured to receive, from a network exposure function network element, the information about the route on which the terminal device is allowed to move.

In another implementation, the communication apparatus provided in this embodiment of this application may alternatively include a hardware component, such as a processor, a memory, or a transceiver.

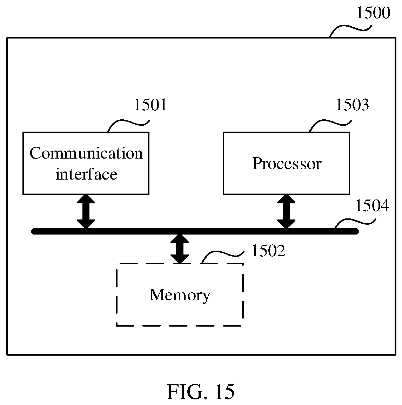

For example, if the communication apparatus is a management device, a structure of the communication apparatus may be shown in FIG. 15. For ease of understanding, FIG. 15 shows only a structure necessary for performing the method shown in this application, and no limitation is imposed on that the communication apparatus may have more components in this application. A communication apparatus 1500 may include a communication interface 1501, a memory 1502, and a processor 1503. The communication interface 1501 may be used by the communication apparatus 1500 to perform communication, for example, configured to send or receive a signal. Specifically, the communication interface 1501 may be used by the communication apparatus 1500 to send and receive a signal in a wired manner. For example, the communication interface 1501 may be used by the communication apparatus 1500 to communicate with an access network device and/or a core network element such as an NEF. The memory 1502 is coupled to the processor 1503, and is configured to store a program and data that are necessary for the communication apparatus 1500 to implement functions. The processor 1503 is configured to support the communication apparatus 1500 in performing a corresponding processing function in the foregoing method, for example, generating information and a message that are sent by the communication interface 1501, and/or demodulating and decoding a signal received by the communication interface 1501. The memory 1502 and the processor 1503 may be integrated together or may be independent of each other.

Specifically, the communication interface 1501 may be a wired communication interface, for example, an interface used for communication between network elements. It should be understood that the memory 1502 may alternatively be externally connected to the communication apparatus 1500. In this case, the communication apparatus 1500 may include only the communication interface 1501 and the processor 1503.

It should be understood that the communication module 1401 may have a structure shown in the communication interface 1501. The processing module 1402 may include the processor 1503, or include the processor 1503 and the memory 1502.

When the foregoing communication apparatus is implemented by using the structure shown in FIG. 15, the processor 1503 may perform the steps performed by the foregoing processing module 1402, and the communication interface 1501 performs the steps performed by the foregoing communication module 1401. The memory 1502 may be configured to store a program, and the processor 1503 invokes the program to perform the steps performed by the processing module 1402.

It should be understood that the components included in the communication apparatus in the foregoing embodiments are illustrative, and are merely a possible example. In an actual implementation, the components included in the communication apparatus may have another composition manner. In addition, the components in the foregoing communication apparatus may be integrated into one module, or may exist independently physically. The foregoing integrated module may be implemented in a form of hardware, or may be implemented in a form of a software functional module. This should not be understood as being limited to the structure shown in the foregoing accompanying drawings.

Based on a same concept as the foregoing method embodiment, an embodiment of this application further provides a computer-readable storage medium. The computer-readable storage medium stores a computer program. When the program is executed by a processor, a computer is enabled to perform an operation performed by the terminal device, the first access network device, the second access network device, or the management device in any one of the foregoing method embodiment or the possible implementations of the foregoing method embodiment.

Based on a same concept as the foregoing method embodiment, this application further provides a computer program product. When the computer program product is invoked and executed by a computer, the computer may be enabled to perform an operation performed by the terminal device, the first access network device, the second access network device, or the management device in any one of the foregoing method embodiment or the possible implementations of the foregoing method embodiment.

Based on a same concept as the foregoing method embodiment, this application further provides a chip or a chip system. The chip may include a processor. The chip may further include a memory (or a storage module) and/or a transceiver (or a communication module); or the chip is coupled to a memory (or a storage module) and/or a transceiver (or a communication module). The transceiver (or the communication module) may be configured to support the chip in performing wired and/or wireless communication. The memory (or the storage module) may be configured to store a program. The processor invokes the program to implement an operation performed by the terminal device, the first access network device, the second access network device, or the management device in any one of the foregoing method embodiment or the possible implementations of the foregoing method embodiment. The chip system may include the foregoing chip, or may include the foregoing chip and another discrete component, such as the memory (or the storage module) and/or the transceiver (or the communication module).

Based on a same concept as the foregoing method embodiment, this application further provides a communication system. The communication system may be configured to implement an operation performed by the terminal device, the first access network device, the second access network device, or the management device in any one of the foregoing method embodiment or the possible implementations of the foregoing method embodiment. For example, the communication system has the structure shown in FIG. 4.

The embodiments of this application are described with reference to flowcharts and/or block diagrams of the method, the apparatus, and the computer program product in the embodiments. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a special-purpose computer, an embedded processor, or a processor of another programmable data processing device to generate a machine, so that the instructions executed by a computer or a processor of another programmable data processing device generates an apparatus for implementing a specific function in one or more procedures in the flowcharts and/or in one or more blocks in the block diagrams.

The computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

## Claims

1. A network access method, wherein the method comprises:
obtaining (S101, S201), by a terminal device (101), first information, wherein the first information comprises network deployment information of one or more network cells, and the network deployment information of each network cell comprises a correspondence between an area covered by the network cell and an identifier of the network cell;
determining (S102, S202), by the terminal device (101), one or more reported cells based on a movement route of the terminal device (101) and the network deployment information of the one or more network cells, wherein the one or more reported cells comprise one or more of the one or more network cells;
sending (S103, S203), by the terminal device (101), second information to a first access network device, wherein the second information comprises identifiers of the one or more reported cells;
receiving (S104, S207), by the terminal device (101), third information from the first access network device, wherein the third information is used to search for and select a target cell, the third information comprises an identifier of the target cell, and the one or more reported cells comprise the target cell; and
accessing (S105, S209), by the terminal device (101), the target cell based on the third information.

2. The method according to claim 1, wherein the area covered by the network cell comprises a route on which the terminal device (101) is allowed to move, and deployment information of each network cell comprises a correspondence between information about the route on which the terminal device (101) is allowed to move and the identifier of the network cell.

3. The method according to claim 2, wherein the information about the route on which the terminal device (101) is allowed to move comprises a geographical location corresponding to the route on which the terminal device (101) is allowed to move.

4. The method according to any one of claims 1 to 3, wherein the determining (S102, S202), by the terminal device (101), one or more reported cells based on a movement route of the terminal device (101) and the network deployment information of the one or more network cells comprises:
determining (S102, S202), by the terminal device (101) based on the network deployment information of the one or more network cells, one or more candidate cells whose coverage areas overlap the movement route of the terminal device (101), wherein the one or more network cells comprise the one or more candidate cells; and
determining (S102, S202), by the terminal device (101), the one or more reported cells based on the one or more candidate cells, wherein the one or more reported cells comprise the one or more candidate cells.

5. The method according to claim 4, wherein the determining (S102, S202), by the terminal device (101), the one or more reported cells based on the one or more candidate cells comprises:
determining (S102, S202), by the terminal device (101) based on signal strengths of the one or more candidate cells, another cell different from the one or more candidate cells in the one or more reported cells, wherein a difference between a signal strength of the another cell and the signal strength of each of the one or more candidate cells falls within a specific range, and an area covered by the another cell overlaps the movement route of the terminal device (101).

6. The method according to any one of claims 1 to 5, wherein the third information further comprises a part or all of the following information:
a frequency point of the target cell;
a handover threshold of the target cell;
a handover priority of the target cell; or
a random access preamble sequence preamble of the target cell.

7. The method according to any one of claims 1 to 6, wherein the obtaining, by a terminal device (101), first information comprises:
obtaining, by the terminal device (101), the first information from the first access network device;
receiving, by the terminal device (101), a broadcast message, and obtaining the first information from the broadcast message; or
locally obtaining, by the terminal device (101), the first information.

8. A network access method according to claim 1 further comprising:
receiving (S103, S203), by the first access network device, the second information from the terminal device (101), wherein the second information comprises the identifiers of one or more reported cells;
selecting (S204), by the first access network device, a target cell from the one or more reported cells based on network performance of the one or more reported cells; and
sending (S104, S207), by the first access network device, the third information to the terminal device (101), wherein the third information comprises the identifier of the target cell.

9. The method according to claim 8, wherein the method further comprises:
receiving, by the first access network device, first information from a management device, wherein the first information comprises network deployment information of one or more network cells, and the network deployment information of each network cell comprises a correspondence between an area covered by the network cell and an identifier of the network cell; and
sending, by the first access network device, the first information to the first terminal device.

10. The method according to claim 9, wherein the area covered by the network cell comprises a route on which the terminal device (101) is allowed to move, and deployment information of each network cell comprises a correspondence between information about the route on which the terminal device (101) is allowed to move and the identifier of the network cell.

11. The method according to claim 10, wherein the information about the route on which the terminal device (101) is allowed to move comprises a geographical location corresponding to the route on which the terminal device (101) is allowed to move.

12. The method according to any one of claims 8 to 11, wherein when the target cell belongs to a second access network device, the method further comprises:
sending (S210), by the first access network device, fourth information to the second access network device, wherein the fourth information comprises a context of the terminal device (101) and the identifier of the target cell, the context of the terminal device (101) is used by the second access network device to determine the third information, and the third information is used by the terminal device (101) to search for and select the target cell; and
receiving (S212), by the first access network device, the third information from the second access network device.

13. A terminal device (900, 1000, 1100, 1200, 1300, 1400, 1500), comprising a transceiver (1003, 1201) and a processor (1001, 1203, 1503), wherein
the transceiver (1003, 1201) is used by the apparatus to perform communication; and
the processor (1001, 1203, 1503) is configured to execute program instructions in a memory (1002, 1202, 1502), to enable the communication apparatus (900, 1000, 1100, 1200, 1300, 1400, 1500) to perform the method according to any one of claims 1 to 7.

14. A computer-readable storage medium comprising instructions which, when executed by a processor (1001, 1203, 1503) of a terminal device (101), cause the processor (1001, 1203, 1503) to carry out the method according to one of claims 1 to 7.

## Patentansprüche

1. Netzwerkzugriffsverfahren, wobei das Verfahren Folgendes umfasst:
Ermitteln (S101, S201) erster Informationen durch eine Endgeräteeinrichtung (101), wobei die ersten Informationen Netzwerkeinsatzinformationen einer oder mehrerer Netzwerkzellen umfassen, und die Netzwerkeinsatzinformationen jeder Netzwerkzelle eine Entsprechung zwischen einem durch die Netzwerkzelle abgedeckten Bereich und einer Kennung der Netzwerkzelle umfassen;
Bestimmen (S102, S202) einer oder mehrerer gemeldeter Zellen durch die Endgeräteeinrichtung (101) basierend auf einer Bewegungsroute der Endgeräteeinrichtung (101) und den Netzwerkeinsatzinformationen der einen oder der mehreren Netzwerkzellen, wobei die eine oder die mehreren gemeldeten Zellen eine oder mehrere der einen oder der mehreren Netzwerkzellen umfassen;
Senden (S103, S203) zweiter Informationen durch die Endgeräteeinrichtung (101) an eine erste Zugriffsnetzwerkeinrichtung, wobei die zweiten Informationen Kennungen der einen oder der mehreren gemeldeten Zellen umfassen;
Empfangen (S104, S207) dritter Informationen aus der ersten Zugriffsnetzwerkeinrichtung durch die Endgeräteeinrichtung (101), wobei die dritten Informationen verwendet werden, um nach einer Zielzelle zu suchen und diese auszuwählen, die dritten Informationen eine Kennung der Zielzelle umfassen und die eine oder die mehreren gemeldeten Zellen die Zielzelle umfassen; und Zugreifen (S105, S209) durch die Endgeräteeinrichtung (101) auf die Zielzelle basierend auf den dritten Informationen.

2. Verfahren nach Anspruch 1, wobei der durch die Netzwerkzelle abgedeckte Bereich eine Route umfasst, auf welcher sich die Endgeräteeinrichtung (101) bewegen darf, und Bereitstellungsinformationen jeder Netzwerkzelle eine Entsprechung zwischen Informationen über die Route, auf welcher sich die Endgeräteeinrichtung (101) bewegen darf, und der Kennung der Netzwerkzelle umfassen.

3. Verfahren nach Anspruch 2, wobei die Informationen über die Route, auf welcher sich die Endgeräteeinrichtung (101) bewegen darf, einen geografischen Standort entsprechend der Route umfassen, auf welcher sich die Endgeräteeinrichtung (101) bewegen darf.

4. Verfahren nach einem der Ansprüche 1 bis 3, wobei das Bestimmen (S102, S202) einer oder mehrerer gemeldeter Zellen durch die Endgeräteeinrichtung (101) basierend auf einer Bewegungsroute der Endgeräteeinrichtung (101) und den Netzwerkeinsatzinformationen der einen oder der mehreren Netzwerkzellen Folgendes umfasst:
Bestimmen (S102, S202) einer oder mehrerer Kandidatenzellen, deren Abdeckungsbereiche die Bewegungsroute der Endgeräteeinrichtung (101) durch die Endgeräteeinrichtung (101) basierend auf den Netzwerkeinsatzinformationen der einen oder der mehreren Netzwerkzellen überlappen, wobei die eine oder die mehreren Netzwerkzellen die eine oder die mehreren Kandidatenzellen umfassen; und
Bestimmen (S102, S202) der einen oder der mehreren gemeldeten Zellen durch die Endgeräteeinrichtung (101) basierend auf der einen oder den mehreren Kandidatenzellen, wobei die eine oder die mehreren gemeldeten Zellen die eine oder die mehreren Kandidatenzellen umfassen.

5. Verfahren nach Anspruch 4, wobei das Bestimmen (S102, S202) der einen oder der mehreren gemeldeten Zellen durch die Endgeräteeinrichtung (101) basierend auf der einen oder den mehreren Kandidatenzellen Folgendes umfasst:
Bestimmen (S102, S202) einer anderen Zelle, die sich von der einen oder den mehreren Kandidatenzellen in der einen oder den mehreren gemeldeten Zellen unterscheidet, durch die Endgeräteeinrichtung (101) basierend auf Signalstärken der einen oder den mehreren Kandidatenzellen, wobei eine Differenz zwischen einer Signalstärke der anderen Zelle und der Signalstärke jeder der einen oder den mehreren Kandidatenzellen in einen spezifischen Bereich fällt, und ein durch die andere Zelle abgedeckter Bereich die Bewegungsroute der Endgeräteeinrichtung (101) überlappt.

6. Verfahren nach einem der Ansprüche 1 bis 5, wobei die dritten Informationen ferner einen Teil oder alle der folgenden Informationen umfassen:
einen Frequenzpunkt der Zielzelle;
einen Übergabeschwellenwert der Zielzelle;
eine Übergabepriorität der Zielzelle; oder
eine Präambelsequenzpräambel mit wahlfreiem Zugriff der Zielzelle.

7. Verfahren nach einem der Ansprüche 1 bis 6, wobei das Ermitteln der ersten Informationen durch die Endgeräteeinrichtung (101) Folgendes umfasst:
Ermitteln der ersten Informationen durch die Endgeräteeinrichtung (101) aus der ersten Zugriffsnetzwerkeinrichtung;
Empfangen einer Broadcast-Nachricht durch die Endgeräteeinrichtung (101) und Ermitteln der ersten Informationen aus der Broadcast-Nachricht; oder
lokales Ermitteln der ersten Informationen durch die Endgeräteeinrichtung (101).

8. Netzwerkzugriffsverfahren nach Anspruch 1, ferner umfassend:
Empfangen (S103, S203) der zweiten Informationen durch die erste Zugriffsnetzwerkeinrichtung an die Endgeräteeinrichtung (101), wobei die zweiten Informationen die Kennungen einer oder mehrerer gemeldeter Zellen umfassen;
Auswählen (S204) einer Zielzelle durch die erste Zugriffsnetzwerkeinrichtung aus der einen oder den mehreren gemeldeten Zellen basierend auf einer Netzwerkleistung der einen oder der mehreren gemeldeten Zellen; und
Senden (S104, S207) der dritten Informationen durch die erste Zugriffsnetzwerkeinrichtung an die Endgeräteeinrichtung (101), wobei die dritten Informationen die Kennung der Zielzelle umfassen.

9. Verfahren nach Anspruch 8, wobei das Verfahren ferner Folgendes umfasst:
Empfangen erster Informationen aus einer Verwaltungseinrichtung durch die erste Zugriffsnetzwerkeinrichtung, wobei die ersten Informationen Netzwerkeinsatzinformationen von einer oder mehreren Netzwerkzellen umfassen, und die Netzwerkeinsatzinformationen jeder Netzwerkzelle eine Entsprechung zwischen einem durch die Netzwerkzelle abgedeckten Bereich und einer Kennung der Netzwerkzelle umfassen; und
Senden der ersten Informationen durch die erste Zugriffsnetzwerkeinrichtung an die Endgeräteeinrichtung.

10. Verfahren nach Anspruch 9, wobei der durch die Netzwerkzelle abgedeckte Bereich eine Route umfasst, auf welcher sich die Endgeräteeinrichtung (101) bewegen darf, und Bereitstellungsinformationen jeder Netzwerkzelle eine Entsprechung zwischen Informationen über die Route, auf welcher sich die Endgeräteeinrichtung (101) bewegen darf, und der Kennung der Netzwerkzelle umfassen.

11. Verfahren nach Anspruch 10, wobei die Informationen über die Route, auf welcher sich die Endgeräteeinrichtung (101) bewegen darf, einen geografischen Standort entsprechend der Route umfassen, auf welcher sich die Endgeräteeinrichtung (101) bewegen darf.

12. Verfahren nach einem der Ansprüche 8 bis 11, wobei das Verfahren, wenn die Zielzelle zu einer zweiten Zugriffsnetzwerkeinrichtung gehört, ferner Folgendes umfasst:
Senden (S210) vierter Informationen durch die erste Zugriffsnetzwerkeinrichtung an die zweite Zugriffsnetzwerkeinrichtung, wobei die vierten Informationen einen Kontext der Endgeräteeinrichtung (101) und die Kennung der Zielzelle umfassen, der Kontext der Endgeräteeinrichtung (101) durch die zweite Zugriffsnetzwerkeinrichtung verwendet wird, um die dritten Informationen zu bestimmen, und die dritten Informationen durch die Endgeräteeinrichtung (101) verwendet werden, um die Zielzelle zu suchen und auszuwählen; und
Empfangen (S212) der dritten Informationen durch die erste Zugriffsnetzwerkeinrichtung aus der zweiten Zugriffsnetzwerkeinrichtung.

13. Endgeräteeinrichtung (900, 1000, 1100, 1200, 1300, 1400, 1500), umfassend einen Sende-Empfänger (1003, 1201) und einen Prozessor (1001, 1203, 1503), wobei
der Sende-Empfänger (1003, 1201) durch die Vorrichtung verwendet wird, um eine Kommunikation durchzuführen; und
der Prozessor (1001, 1203, 1503) dazu konfiguriert ist, Programmanweisungen in einem Speicher (1002, 1202, 1502) auszuführen, um die Kommunikationsvorrichtung (900, 1000, 1100, 1200, 1300, 1400, 1500) in die Lage zu versetzen, das Verfahren nach einem der Ansprüche 1 bis 7 durchzuführen.

14. Computerlesbares Speichermedium, umfassend Anweisungen, welche bei Ausführung durch einen Prozessor (1001, 1203, 1503) einer Endgeräteeinrichtung (101) bewirken, dass der Prozessor (1001, 1203, 1503) das Verfahren nach einem der Ansprüche 1 bis 7 durchführt.

## Revendications

1. Procédé d'accès au réseau, dans lequel le procédé comprend :
l'obtention (S101, S201), par un dispositif terminal (101), de premières informations, dans lequel les premières informations comprennent des informations de déploiement de réseau d'une ou plusieurs cellules de réseau, et les informations de déploiement de réseau de chaque cellule de réseau comprennent une correspondance entre une zone couverte par la cellule de réseau et un identifiant de la cellule de réseau ;
la détermination (S102, S202), par le dispositif terminal (101), d'une ou plusieurs cellules signalées sur la base d'un itinéraire de déplacement du dispositif terminal (101) et des informations de déploiement de réseau des une ou plusieurs cellules de réseau, dans lequel les une ou plusieurs cellules signalées comprennent l'une ou plusieurs des une ou plusieurs cellules de réseau ;
l'envoi (S103, S203), par le dispositif terminal (101), de deuxièmes informations à un premier dispositif de réseau d'accès, dans lequel les deuxièmes informations comprennent des identifiants des une ou plusieurs cellules signalées ;
la réception (S104, S207), par le dispositif terminal (101), de troisièmes informations à partir du premier dispositif de réseau d'accès, dans lequel les troisièmes informations sont utilisées pour rechercher et sélectionner une cellule cible, les troisièmes informations comprennent un identifiant de la cellule cible, et les une ou plusieurs cellules signalées comprennent la cellule cible ; et
l'accès (S105, S209), par le dispositif terminal (101), à la cellule cible sur la base des troisièmes informations.

2. Procédé selon la revendication 1, dans lequel la zone couverte par la cellule de réseau comprend un itinéraire sur lequel le dispositif terminal (101) est autorisé à se déplacer, et les informations de déploiement de chaque cellule de réseau comprennent une correspondance entre les informations relatives à l'itinéraire sur lequel le dispositif terminal (101) est autorisé à se déplacer et l'identifiant de la cellule de réseau.

3. Procédé selon la revendication 2, dans lequel les informations relatives à l'itinéraire sur lequel le dispositif terminal (101) est autorisé à se déplacer comprennent une localisation géographique correspondant à l'itinéraire sur lequel le dispositif terminal (101) est autorisé à se déplacer.

4. Procédé selon l'une quelconque des revendications 1 à 3, dans lequel la détermination (S102, S202), par le dispositif terminal (101), d'une ou plusieurs cellules signalées sur la base d'un itinéraire de déplacement du dispositif terminal (101) et des informations de déploiement de réseau des une ou plusieurs cellules de réseau comprend :
la détermination (S102, S202), par le dispositif terminal (101) sur la base des informations de déploiement de réseau des une ou plusieurs cellules de réseau, une ou plusieurs cellules candidates dont les zones de couverture chevauchent l'itinéraire de déplacement du dispositif terminal (101), dans lequel les une ou plusieurs cellules de réseau comprennent les une ou plusieurs cellules candidates ; et
la détermination (S102, S202), par le dispositif terminal (101), des une ou plusieurs cellules signalées sur la base des une ou plusieurs cellules candidates, dans lequel les une ou plusieurs cellules signalées comprennent les une ou plusieurs cellules candidates.

5. Procédé selon la revendication 4, dans lequel la détermination (S102, S202), par le dispositif terminal (101), des une ou plusieurs cellules signalées sur la base des une ou plusieurs cellules candidates comprend :
la détermination (S102, S202), par le dispositif terminal (101) sur la base de puissances de signal des une ou plusieurs cellules candidates, une autre cellule différente des une ou plusieurs cellules candidates dans les une ou plusieurs cellules signalées, dans lequel une différence entre une force de signal de l'autre cellule et la force de signal de chacune des une ou plusieurs cellules candidates se situe dans une plage spécifique, et une zone couverte par l'autre cellule chevauche l'itinéraire de déplacement du dispositif terminal (101).

6. Procédé selon l'une quelconque des revendications 1 à 5, dans lequel les troisièmes informations comprennent également une partie ou la totalité des informations suivantes :
un point de fréquence de la cellule cible ;
un seuil de transfert de la cellule cible ;
une priorité de transfert de la cellule cible ; ou
un préambule de séquence de préambule d'accès aléatoire de la cellule cible.

7. Procédé selon l'une quelconque des revendications 1 à 6, dans lequel l'obtention, par un dispositif terminal (101), de premières informations comprend :
l'obtention, par le dispositif terminal (101), des premières informations à partir du premier dispositif de réseau d'accès ;
la réception, par le dispositif terminal (101), d'un message diffusé, et l'obtention des premières informations à partir du message diffusé ; ou
l'obtention locale, par le dispositif terminal (101), des premières informations.

8. Procédé d'accès au réseau selon la revendication 1 comprenant également :
la réception (S103, S203), par le premier dispositif de réseau d'accès, des deuxièmes informations à partir du dispositif terminal (101), dans lequel les deuxièmes informations comprennent les identifiants des une ou plusieurs cellules signalées ;
la sélection (S204), par le premier dispositif de réseau d'accès, d'une cellule cible parmi les une ou plusieurs cellules signalées sur la base de performances de réseau des une ou plusieurs cellules signalées ; et
l'envoi (S104, S207), par le premier dispositif de réseau d'accès, des troisièmes informations au dispositif terminal (101), dans lequel les troisièmes informations comprennent l'identifiant de la cellule cible.

9. Procédé selon la revendication 8, dans lequel le procédé comprend également :
la réception, par le premier dispositif de réseau d'accès, de premières informations à partir d'un dispositif de gestion, dans lequel les premières informations comprennent des informations de déploiement de réseau d'une ou plusieurs cellules de réseau, et les informations de déploiement de réseau de chaque cellule de réseau comprennent une correspondance entre une zone couverte par la cellule de réseau et un identifiant de la cellule de réseau ; et
l'envoi, par le premier dispositif de réseau d'accès, des premières informations au premier dispositif terminal.

10. Procédé selon la revendication 9, dans lequel la zone couverte par la cellule de réseau comprend un itinéraire sur lequel le dispositif terminal (101) est autorisé à se déplacer, et les informations de déploiement de chaque cellule de réseau comprennent une correspondance entre les informations relatives à l'itinéraire sur lequel le dispositif terminal (101) est autorisé à se déplacer et l'identifiant de la cellule de réseau.

11. Procédé selon la revendication 10, dans lequel les informations relatives à l'itinéraire sur lequel le dispositif terminal (101) est autorisé à se déplacer comprennent une localisation géographique correspondant à l'itinéraire sur lequel le dispositif terminal (101) est autorisé à se déplacer.

12. Procédé selon l'une quelconque des revendications 8 à 11, dans lequel lorsque la cellule cible appartient à un second dispositif de réseau d'accès, le procédé comprend également :
l'envoi (S210), par le premier dispositif de réseau d'accès, de quatrièmes informations au second dispositif de réseau d'accès, dans lequel les quatrièmes informations comprennent un contexte du dispositif terminal (101) et l'identifiant de la cellule cible, le contexte du dispositif terminal (101) est utilisé par le second dispositif de réseau d'accès pour déterminer les troisièmes informations, et les troisièmes informations sont utilisées par le dispositif terminal (101) pour rechercher et sélectionner la cellule cible ; et
la réception (S212), par le premier dispositif de réseau d'accès, des troisièmes informations à partir du second dispositif de réseau d'accès.

13. Dispositif terminal (900, 1000, 1100, 1200, 1300, 1400, 1500), comprenant un émetteur-récepteur (1003, 1201) et un processeur (1001, 1203, 1503), dans lequel
l'émetteur-récepteur (1003, 1201) est utilisé par l'appareil pour réaliser la communication ; et
le processeur (1001, 1203, 1503) est configuré pour exécuter des instructions de programme dans une mémoire (1002, 1202, 1502), pour amener l'appareil de communication (900, 1000, 1100, 1200, 1300, 1400, 1500) à réaliser le procédé selon l'une quelconque des revendications 1 à 7.

14. Support de stockage lisible par ordinateur comprenant des instructions qui, lorsqu'elles sont exécutées par un processeur (1001, 1203, 1503) d'un dispositif terminal (101), amènent le processeur (1001, 1203, 1503) à mettre en œuvre le procédé selon l'une quelconque des revendications 1 à 7.
